(19) Europäisches Patentamt
European Patent Office
Office européen des brevets

(11) **EP 2 665 261 A1**

(12) **EUROPEAN PATENT APPLICATION**
published in accordance with Art. 153(4) EPC

(43) Date of publication:
**20.11.2013 Bulletin 2013/47**

(51) Int Cl.:
***H04N 7/173*** (2011.01)

(21) Application number: **12734078.4**

(86) International application number:
**PCT/JP2012/050583**

(22) Date of filing: **13.01.2012**

(87) International publication number:
**WO 2012/096372 (19.07.2012 Gazette 2012/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2011 JP 2011005639**

(71) Applicant: **Sharp Kabushiki Kaisha**
**Osaka-shi, Osaka 545-8522 (JP)**

(72) Inventor: **TAKAHASHI, Maki**
**Osaka-shi, Osaka 545-8522 (JP)**

(74) Representative: **Müller - Hoffmann & Partner**
**Patentanwälte**
**Innere Wiener Strasse 17**
**81667 München (DE)**

(54) **CONTENT REPRODUCTION DEVICE, CONTENT REPRODUCTION METHOD, DELIVERY SYSTEM, CONTENT REPRODUCTION PROGRAM, RECORDING MEDIUM, AND DATA STRUCTURE**

(57)    A playing device (100) includes a communication control unit (110) to obtain a first media segment (MS) from a distribution server (300) using DASH and obtain a following MS by multicast communication, and a playing unit (120) to play the received MS. The control unit (110) starts obtaining of the first MS using DASH and obtaining of the following MS by multicast communication at the same time. The playing unit (120) plays the first-obtained MS using DASH before the MS obtained subsequently by multicast communication.

FIG. 1

**Description**

Technical Field

The present invention relates to a content playing device and a content playing method to play content data obtained from a distribution server. Also, the present invention relates to a distribution system including such a distribution server and a content playing device. Also, the present invention relates to a content playing program cause a computer to operate as such a content playing device, and a recording medium storing such a content playing program. Further, the present invention relates to data structure of data to which the content playing device references in order to obtain content data.

Background Art

In accordance with the rapid increase of demand for the Internet as of recent, there are more users viewing not only WEB pages made up of text or still images, but also watching moving image content.

Based on such a situation, various techniques to transmit moving image content have been developed, one example of which is DASH (Dynamic Adaptive Streaming over HTTP), of which standardization work is currently proceeding.

DASH stipulates two formats; MPD (Media Presentation Description) and media segment. The media segment is a transmission unit of HTTP transmission where moving image content has been subjected to time division. Also, MPD is metadata relating to the moving image content, where information such as a URL of the media segment, and a quality aspect (e.g., three kinds of video bit rates of 1 Mbps, 2 Mbps, and 4 Mbps) which can be presented, and so forth, is stipulated for every period. The MPD is transmitted to a client device before the distribution start of the moving image content by a distribution server.

Streaming distribution using DASH has the following various advantages, unlike simultaneous transmission distribution such as digital broadcasting or IP multicast broadcasting.

Advantage 1: A client device compatible with DASH, which performs reception and playing of the media segments with reference to the MPD, can select and play an appropriate media segment in accordance with the state of the band load on the network with the distribution server. That is to say, appropriate streaming playing of the moving image content can be performed in accordance with the state of the band load.

Advantage 2: With DASH, multiple moving image content of which video bit rates are different can be distributed, whereby centralized streaming services can be provided to various client devices of which processing capacities are different, such as a portable terminal, a PC, a television set, and so forth.

Advantage 3: With DASH, on-demand distribution can be performed as well as live distribution, unlike simultaneous transmission video distribution such as digital broadcasting or IP multicast broadcasting.

Advantage 4: With DASH, in comparison with video distribution techniques such as digital broadcasting or IP multicast broadcasting, the client device can control reception speed of the content data, whereby waiting time until starting playing, after a user has given a playing instruction, can be reduced.

Summary of Invention

Technical Problem

However, DASH is a streaming distribution technique using unicast communication, and the distribution server has to perform streaming distribution individually to the client devices, and accordingly there has been a problem in that the band load of the network on the distribution server side and processing load of the distribution server are increased generally proportional to the number of the client device.

The present invention has been made in light of the above problem, and a primary object thereof is to realize a content playing device capable of starting playing of content data with a short waiting time, while suppressing the band load of the network on the distribution server side and processing load of the distribution server.

Solution to Problem

To solve the problem, the content device according to the present invention is a content playing device to, upon accepting a playing instruction from a user, sequentially play a plurality of time division data regarding which content data to be played has been subjected to time division, while obtaining the time division data from a distribution server, including: first obtaining means configured to obtain by unicast communication from the distribution server, of the plurality of time division data, a part of the time division data regarding which the distribution server has already performed multicast distribution; second obtaining means configured to obtain by receiving multicast distribution from the distribution server, of the plurality of time division data, the remaining time division data to be played following the part of the time division data; and playing means configured to first play the time division data which the first obtaining means has first obtained, out of the plurality of time division data.

According to the above configuration, the content device according to the present invention completes, by starting processing to obtain a part of time division data by unicast communication before a point in time at which processing to obtain the remaining time division data by multicast distribution is stored, or immediately after the point in time, obtaining of, by unicast communication, the first time division data making up the part of time division data, earlier than the timing to complete obtaining by multicast distribution of the first time division data making up the remaining time division data, and first plays, out of the multiple time division data, the time division data obtained first.

Thus, the content playing device according to the present invention can start playing of the content data, earlier than the timing at which the conventional client device which receives only multicast distribution and plays the content data starts playing of the content data. Also, with the content playing device according to the present invention, data to be received by unicast communication is only a part of time division data included in the content data, thereby suppressing the band load of the network on the distribution server side and processing load of the distribution server.

As described above, the content playing device according to the present invention has an advantage of suppressing the band load of the network on the distribution server side and processing load of the distribution server and it enables to start playing of video content in a short waiting time.

To solve the above problem, a content method according to the present invention is a content playing method to, upon accepting a playing instruction from a user, sequentially play a plurality of time division data regarding which content data to be played has been subjected to time division, while obtaining the time division data from a distribution server, including:

a first obtaining process of obtaining by unicast communication from the distribution server, of the plurality of time division data, a part of the time division data regarding which the distribution server has already performed multicast distribution;

a second obtaining process of obtaining by receiving multicast distribution from the distribution server, of the plurality of time division data, the remaining time division data to be played following the part of the time division data; and

a playing process of first playing the division data which has first obtained in the first obtaining process, out of the plurality of time division data which has been obtained through the first obtaining process and the second obtaining process.

According to the above configuration, the content playing method according to the present invention yields advantages similar to the content playing device according to the present invention.

Advantageous Effects of Invention

As described above, the content playing device according to the present invention yields the advantages of starting playing of content data with a short waiting time, while suppressing the band load of the network on the distribution server side and the processing load of the distribution server. Brief Description of Drawings

[Fig. 1] Fig. 1 is a diagram illustrating a configuration of a playing device according to an embodiment of the present invention.

[Fig. 2] Fig. 2 is a diagram illustrating an overall configuration of a distribution system according to the embodiment of the present invention.

[Fig. 3] Fig. 3 is a diagram illustrating an example of MPD (Media Presentation Description) data where the playing device in Fig. 1 references.

[Fig. 4] Fig. 4 is a diagram illustrating another example of MPD data which the playing device in Fig. 1 references.

[Fig. 5] Fig. 5 is a flowchart illustrating an embodiment of an operation until the playing device in Fig. 1 starts playing of video.

[Fig. 6] Fig. 6 is a diagram schematically illustrating a temporal relationship between a schedule in which a distribution server distributes media segments, a schedule in which a conventional client receive and play the media segments, and a schedule in which the playing device in Fig. 1 receives and plays the media segments in accordance with the flowchart in Fig. 5, with the distribution system in Fig. 2.

[Fig. 7] Fig. 7 is a flowchart illustrating another embodiment of an operation until the playing device in Fig. 1 starts playing of video.

[Fig. 8] Fig. 8 is a diagram schematically illustrating a temporal relationship between a schedule in which the distribution server distributes media segment, a schedule in which the playing device in Fig. 1 receives and plays the media segments in accordance with the flowchart in Fig. 7.

[Fig. 9] Fig. 9 is a diagram illustrating a configuration of a playing device relating to another embodiment of the present invention.

[Fig. 10] Fig. 10 is a diagram illustrating an overall configuration of a distribution system according to another embodiment of the present invention.

[Fig. 11] Fig. 11 is a flowchart illustrating an embodiment of an operation until the playing device in Fig. 9 starts playing of video.

[Fig. 12] Fig. 12 is a diagram illustrating a data structure of media segments which the distribution server distributes in the distribution system in Fig. 10. (a) illustrates data structure of MPEG2-TS format and (b) illustrates data structure of MP4 format.

[Fig. 13] Fig. 13 is a diagram schematically illustrating a temporal relationship between a schedule in which the distribution server distributes the media segments and a schedule in which the playing device receives and plays the media segments in accordance with the flowchart in Fig. 5, in a case where there a great delay has occurred in communication between the distribution server and the playing device in Fig. 9.

[Fig. 14] Fig. 14 is a diagram schematically illustrating a temporal relationship between a schedule in which the distribution server distributes the media segments and a schedule in which the playing device receives and plays the media segments in accordance with the flowchart in Fig. 5, in a case where synchronization between a built-in clock of the distribution server and a built-in clock of the playing device in Fig. 9 is not attained.

[Fig. 15] Fig. 15 is a diagram schematically illustrating a specific example of RTP packets which the distribution server generates in order to distribute the media segment.

[Fig. 16] Fig. 16 is a diagram illustrating a configuration of a playing device according to another embodiment of the present invention.

[Fig. 17] Fig. 17 is a diagram illustrating an overall configuration of a distribution system according to another embodiment of the present invention.

[Fig. 18] Fig. 18 is a diagram schematically illustrating another specific example of RTP packets which the distribution server generates in order to distribute the media segment.

[Fig. 19] Fig. 19 is a flowchart illustrating an embodiment of an operation until the playing device in Fig. 16 starts playing of video.

[Fig. 20] Fig. 20 is a diagram further illustrating another specific example of RTP packets which the distribution server generates in order to distribute the media segment.

[Fig. 21] Fig. 21 is a flowchart illustrating another embodiment of an operation until the playing device in Fig. 16 starts playing of video.

Description of Embodiments

[First Embodiment]

The distribution system according to an embodiment of the present invention is a distribution system to perform live  distribution and on-demand distribution on video content to the playing device.

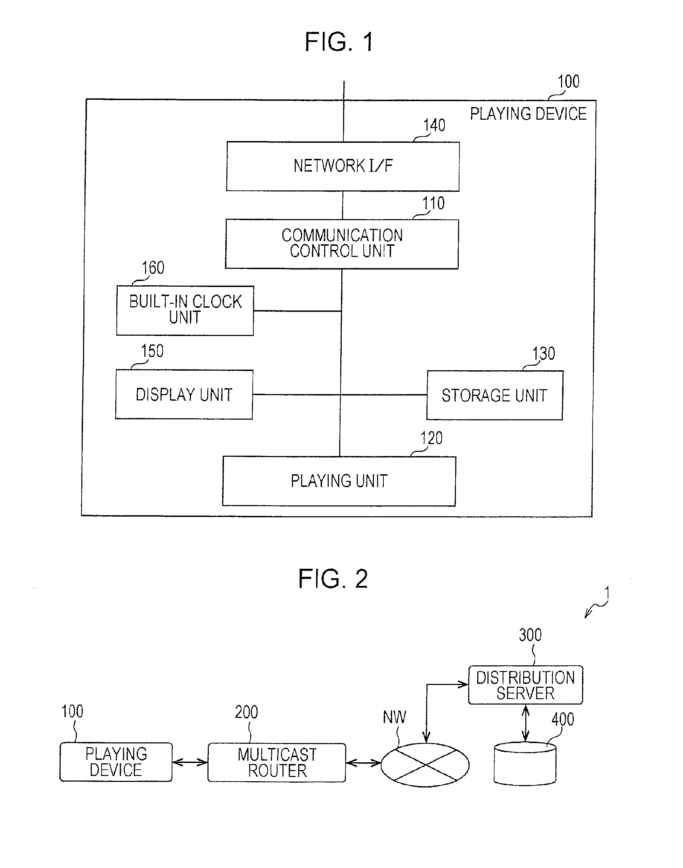

Description will be made regarding a distribution system according to an embodiment of the present invention with reference to Fig. 1 through Fig. 8.

Fig. 1 is a diagram illustrating an overall configuration of a playing device according to the present embodiment and Fig. 2 is a diagram illustrating an overall configuration of a distribution system 1 according to the embodiment of the present invention.

As illustrated in Fig. 2, the distribution system 1 is a system including a playing device 100, a multicast router 200, a distribution server 300, and a network storage server (NAS) 400. Also, the playing device 100 and distribution server 300 are connected to the Internet NW, and the multicast router 200 is set on the boundary between the local area network to which the distribution server 300 belongs and the Internet NW.

Hereinafter, description will be made regarding the playing device 100, multicast router 200, distribution server 300, and NAS 400.

(Playing Device 100)

Upon accepting a playing instruction of the video content via an operation unit (unshown) from a user, the playing device 100 receives and plays the video content to be subjected to real time play, in increments of media segments (each increment obtained by dividing encoded data of the video content at a certain time each (10 seconds with the present embodiment), hereinafter, referred to as "MS") from the distribution server 300. As illustrated in Fig. 1, the playing device 100 includes a communication control unit 110, a playing unit 120, a storage unit 130, a network I/F 140, a display unit 150 and a built-in clock unit 160. Specific examples of the playing device 100 include a smartphone, smart TV, and the like.

(Communication Control Unit 110)

The communication control unit 110 receives the later-described MPD data (metadata) relating to the video content from the distribution server 300 beforehand and records in the storage unit 130.

Upon accepting the playing instruction of the video content (hereinafter, the video content which has accepted the playing instruction is referred to as "target video content") from a user, the communication control unit 110 identifies the distribution point-in-time where the distribution server 300 distributes each media segment (time division data) making up the target video content, by referencing the MPD data relating to the target video content. The communication control unit 110 then identifies a URL of the media segments to be received from the current point-in-time and distribution point-in-time identified regarding the media segments, and transmits an HTTP request to the distribution server 300, in a case of the URL of the identified media segments being from unicast communication (HTTP).

The communication control unit 110 further transmits a request of multicast distribution of the target video content to the multicast router 200, in a case of the URL of the identified media segments being from multicast distribution (RTP).

The communication control unit 110 stores the received media segment in the storage unit 130.

(Playing Unit 120)

The playing unit 120 displays target video content on the display unit 150, by reading out the media segments subjected to buffering in the storage unit 130 and performing decoding and playing, in order of earliest in the point-in-time to be played.

(Storage unit 130)

The storage unit 130 is a recording medium to store the media segments making up the target video content, and various types of data such as MPD data or the like regarding the target video content.

(Network I/F 140)

The network I/F 140 transmits and receives the data between the server 300 and multicast router 200.

(Display unit 150)

The display unit 150 is a display displaying target video content.

(Built-in clock unit 160)

The built-in clock unit 160 is an RTC (real-time clock) installed in the playing device 100.

(Multicast Router 200)

The multicast router 200 is a first hop router of the playing device 100 which registers the playing device 100 in the multicast group used for multicast distribution of the target video content, upon receiving the request of multicast distribution of the target video content from the playing device 100.

Upon receiving the media segments making up the target video content after registration from the distribution server 300, the multicast router 200 transfers the media segments thereof to the subnet to which the playing device 100 belongs. (Distribution Server 300)

The distribution server 300 transmits the MPD data recorded in the NAS 400 to the playing device 100, when receiving the request of the MPD data from the playing device 100.

While sequentially recording video from a live camera (unshown) making up the video content in increments of the media segments in the NAS 400, the distribution server 300 performs multicast distribution on the target video content. Also, upon receiving the HTTP request of the media segments from the playing device 100, the distribution server 300 distributes the media segments recorded in the NAS 400 by DASH to the playing device 100.

(NAS 400)

The NAS 400 is a network storage to hold the media segments making up the video content and the MPD data relating to the video content.

(Details of MPD data)

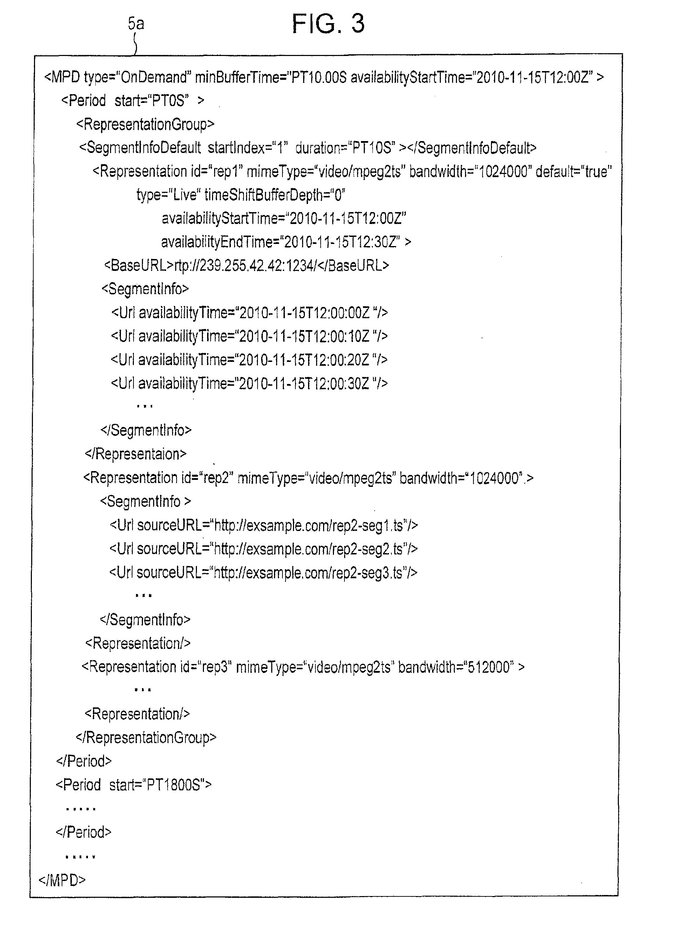

Next, description will be made in the following, regarding details of the MPD data with reference to Fig. 3. Fig. 3 is a diagram illustrating a specific example of the MPD data to be referenced, in order to identify the media segments which the NAS 400 holds and the playing device 100 should receive.

As illustrated in Fig. 3, the MPD data 5a is data of markup language format with "MPD" as a root element. The value of attribute "minBufferTime" of the MPD start-tag indicates the smallest initial buffering time necessary to play video smoothly, and the value of attribute "type" indicates a default value of the attribute "type" of the later-described "Representation". That is to say, the value of the attribute "type" indicates whether the representation where the attribute "type" is not specified in "Representation" tag is on-demand streaming distribution, or live streaming distribution. Also, as for the value of attribute "availabilityStartTime", distribution start point-in-time of the video content indicated in UTC (Coordinated Universal Time) is written.

"Period" which is a sub element of the "MPD" indicates that information relating to the video to be played in a particular period (period) is described in the range between by the corresponding Period start-tag and end-tag. The start time of the period is written to attribute "start", with a relative point-in-time of the head of the video content as a reference. In the example of the MPD data 5a in Fig. 3, information relating to the video to be played, from the video content head until the point-in-time of 1,800 seconds, is described in the range between <Period start="PT0S"> and </Period>.

"RepresentationGroup" which is a sub element of the "Period" indicates that one or more sub element "Representation" described in the range between RepresentationGroup start-tag and end-tag, belongs to the same representation group. That is to say, this indicates that only one any of the selected media segments of the representation (data to be played) is to be played in this period. Note that, while the representations which belong to the same representation group have differences in playing quality such as image size, frame rate, bit rate, or the like, the content to be played is the same. The example of the MPD data 5a in Fig. 3 indicates that the three sub elements "Representation" are described in the range between <Period start="PT0S"> and </Period>, i.e., in the period when 12:00 November 15, 2011 is set as distribution start point-in-time, any media segment of the representation of three representation media segments can be received from the distribution server, and be played at the playing device 100.

Also, a sub element "SegmentInfoDefault" is described in the range between the RepresentationGroup start-tag and end-tag. The value of attribute "duration" of the SegmentInfoDefault start-tag indicates time required for completion of playing from the start of playing of the media segments sequentially played during the period. With the example of the MPD data 5a, this is 10 seconds. Also, the value of attribute "startIndex" indicates an initial value of an index (identification value) to identify the media segments belonging to each representation. The example of the MPD data 5a indicates that the index of the head media segment belonging to each representation is set as 1 and the indices 2,3,4, etc. are sequentially attached to the following media segments. Note that, while the media segments to which the same index has been attached, and belonging to the same representation group, have difference in playing quality such as image size, frame rate, bit rate, or the like, the content to be played is the same.

The value "true" of the attribute "default" of the Representation start-tag indicates that this is the representation to be played by default, out of the representations belonging to the same representation group. Also, the value of attribute "mimeType" of the Representation start-tag indicates the codec type and the like to be used for the media segments making up the representation. Also, the value of attribute "bandwidth" indicates bit rate necessary to sequentially receive media segments making up the representation, and perform streaming playing. Further, the value of attribute "type" of the Representation start-tag indicates whether the representation is on-demand streaming distribution, or live streaming distribution. Attribute "timeShiftBufferDepth" is an attribute which is effective only with live streaming distribution, and indicates, regarding the media segments, time from the distribution server starting the distribution of the media segments, until the media segments are discarded. In the example of the MPD data 5a, the Value 0 is set to the representation of id="rep1", which indicates that the media segment of the representation is discarded from the distribution server immediately after the distribution. In other words, this indicates that the media segment of this representation is not to be redistributed from the distribution server.

Further, a distribution start point-in-time and a distribution end point-in-time of this representation indicated in UTC are written in a value of attribute "availabilityStartTime" and a value of attribute "availabilityEndTime".

A sub element "SegmentInfo" where information relating to the media segment making up the representation is described in the range between the Representation start-tag and end-tag. The range between SegmentInfo start-tag and end-tag includes a sub element "Url" to describe information relating to a URL of the media segments. The sub element "SegmentInfo" includes sub elements "Url" of a number equivalent to the number of the media segments making up the representation. As described above, the Url tag belonging to the same "SegmentInfo" is identified by indices startIndex, startIndex+1, startIndex+2, etc., sequentially from the top. Attribute "sourceURL" of the Url tag indicates a URL that is necessary at the time of obtaining the media segment which the Url tag indicates. Note that, in the event that a part or all of the URLs match with multiple Url tags, the common parts may be described in a sub element "BaseURL". In the event that all of the URLs of the media segments are described in the sub element "BaseURL", description of attribute "sourceURL" of the Url tag can be omitted. Specifically, in the event of live distribution, the media segments of the same representation are sequentially distributed, and accordingly, using the same URL can be enabled by identifying the media segments with the distribution point-in-time. In the example of the MPD data 5a, id="rep1" is representation for live distribution, and a common URL "rtp: //239.255.42.42:1234/" for multicast distribution by RTP which is described in a sub element "BaseURL" for the URL of the media segments, is used, whereby description of attribute "sourceURL" of the Url tags is omitted. Attribute "availabilityTime" is described in the Url tags instead, and UTC distribution point-in-time of the media segments is described.

On the other hand, identification of the media segments by distribution point-in-time cannot be performed with the representation for on-demand distribution, and accordingly, each media segment is identified by attribute "sourceURL".

As it can be understood from the description, the present embodiment has a configuration such that a representation to be referenced in order to receive live streaming distribution of the video content and a representation to be referenced in order to receive on-demand streaming distribution of the video content are described in a single MPD data.

Multicast distribution by RTP is used for the representation to be referenced in order to receive live streaming distribution of the video content and unicast distribution by HTTP is used for the representation to be referenced in order to receive on-demand streaming distribution of the video content.

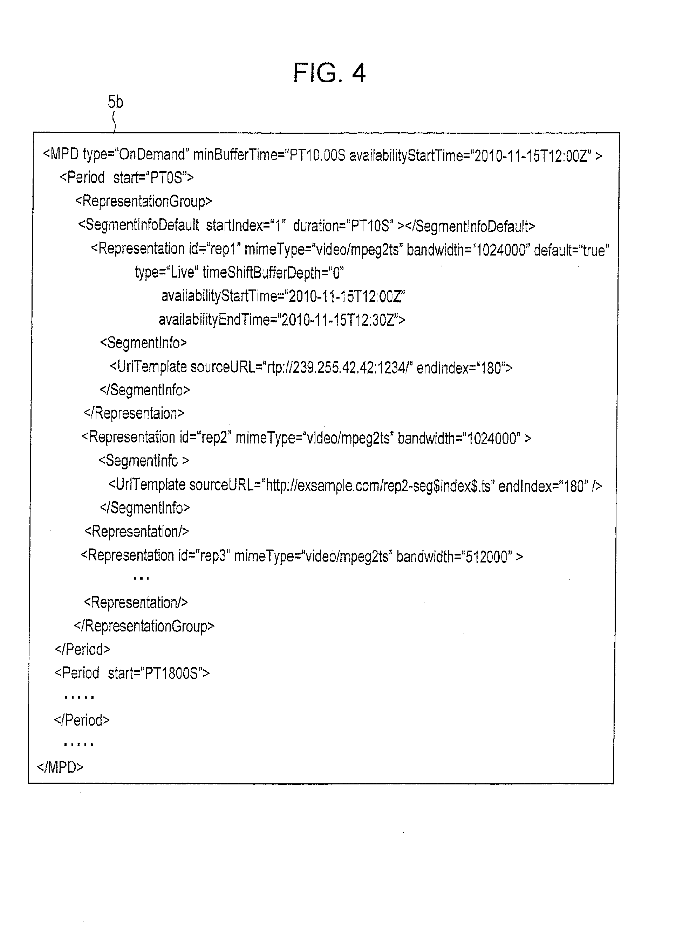

Note that, the MPD data may be described like the MPD data 5b of Fig. 4, rather than like the MPD data 5a in Fig. 3. With the MPD data 5b of Fig. 4, description of the multiple sub elements "Url" included in SegmentInfo is concisely performed by a sub element "UrlTemplate" being used instead of the sub element "Url". The sub element "UrlTemplate" is an element to replace the sub element "Url" having indices of media segments with the value of attribute "endIndex" or below. The example of the MPD data 5b in Fig. 4 replaces the Url of the indices 1 to 180 with a single UrlTemplate.

That is to say, in the event that the value of the attribute "type" of the Representation is "Live", "BaseURL" is not included in the sub element of Representation, and a single sub element "UrlTemplate" may be included instead of the sub elements "Url" of a number equivalent to the number of the media segments, as a sub element of SegmentInfo. In this case, a URL is described as a value of attribute "sourceURL" of the UrlTemplate, and an index of the last media segment in this period is described as a value of attribute "endindex".

Also, in the event that the value of the attribute "type" of the Representation is "OnDemand" as well, a single sub element "UrlTemplate" may be included instead of the sub elements "Url" which is equivalent to the number of the segments, as a sub element of SegmentInfo. In this case, URLs of the media segments are expressed using a variable of an index value called $index. Thereby, the URLs of all media segments can be expressed with a "UrlTemplate" tag. However, it goes without saying that a certain constraint (e.g., generating a TS file with the naming rules, such as including an index value in a part of the file name, as illustrated) is necessary for the expression of the URL, so that such an expression is enabled.

Note that, in the MPD data 5b, attribute "availabilityEndTime" does not have to be described. This is because the point-in-time at which to complete the distribution of the media segments of the representation to be targeted can be calculated, by adding a value of attribute "availabilityEndTime" to the product of a value of attribute "duration" and a value of attribute "EndIndex".

(Operation Example 1 of Operation where Playing device 100 Starts Playing of Video Content)

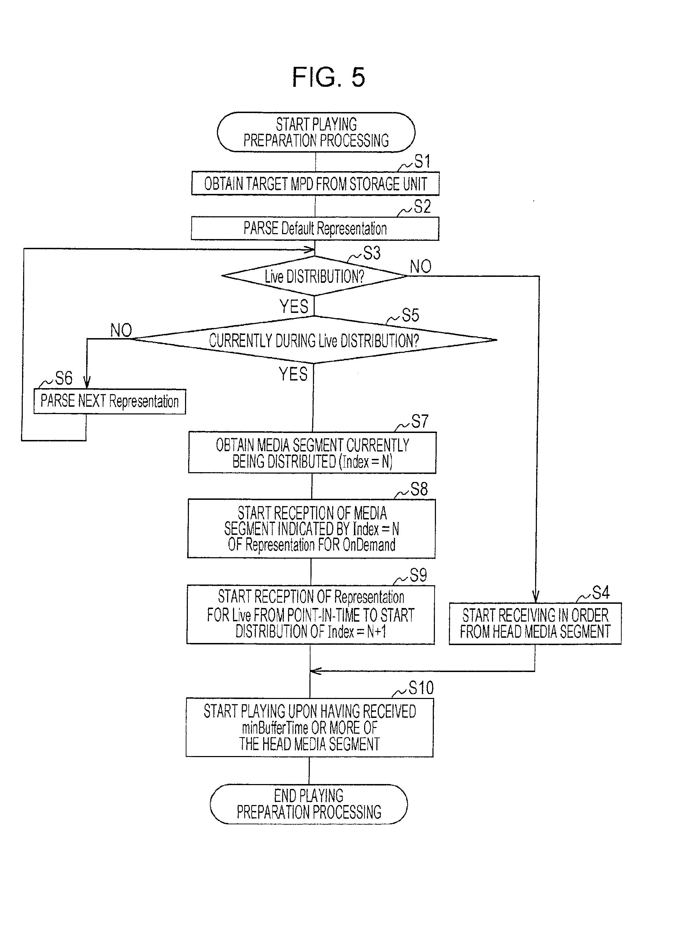

Hereinafter, description will be made regarding an operation example of the operation where the playing device 100 until starting streaming playing of the video content will be described in the reference to Fig. 5. Note that, in the following description, description will be made regarding a case where all representations described with MPD data belong to a single representation group, but in the event that there multiple representation groups exist, similar processing can be performed for each representation group, so description thereof will be omitted.

Fig. 5 is a flowchart which illustrates operation until the playing device 100 starting playing of the video content.

Upon the playing device 100 accepting a playing instruction of the video content from a user via an unshown operating unit, the communication control unit 110 of the playing device 100 reads MPD data 5a relating to the target video content received from the distribution server beforehand, from the storage unit 130, as illustrated in Fig. 5 (step S1). Note that, a configuration may be made such that the MPD data is not obtained beforehand, but received after the playing instruction, from the distribution server.

Next, the communication control unit 110 selects and parses the Representation start-tag of which the value of the attribute "default" is "True" as a target representation (step S2). Specifically, the communication control unit 110 identifies a period (hereinafter, referred to as "the target period") that the current point-in-time where the built-in clock unit 160 points belongs to, based on the value of attribute "availabilityStartTime" of the MPD start-tag and a value of attribute "start" of each Period start-tags, and identifies and parses the Representation start-tag of which the value of the attribute "default" is "True", out of the Representation start-tags described between the corresponding Period start-tag and end-tag (hereinafter, referred to as "the Representation start-tag of the target period"). In the following, a Representation start-tag which has become a target to be parsed right away will be referred to as a target Representation start-tag.

The communication control unit 110 determines whether or not the value of the attribute "type" of the target Representation start-tag parsed in the step immediately before (step S2 or step S6) is "Live" (step S3).

In the event that determination is made that this is not "Live" (NO in step S3), the communication control unit 110 starts reception of the head media segment of the target representation (step S4) and advances to step S10.

On the other hand, in the event that determination is made that this is "Live" (YES in step S3), the communication control unit 110 determines whether or not the target representation is currently being subjected to live streaming distribution (step S5). Specifically, the communication control unit 110 determines whether or not the value of the current point-in-time where the built-in clock unit 160 points is equal to or above the value of attribute "availabilityStartTime" of the target Representation start-tag is and is less than the value of the attribute "availabilityEndTime". Note that, the determination of the magnitude of the attribute "availabilityStartTime" value is performed by comparing the magnitude of a value where the current point-in-time which the built-in clock indicates has been converted into UTC and the attribute "availabilityStartTime" value.

In step S5, in the event that determination is made that live streaming distribution is not being performed (NO in step S5), the communication control unit 110 selects and parses the Representation start-tag located next to the target Representation start-tag in the Representation start-tags of the target period, as the target representation (step S6), and returns to step S3.

On the other hand, in the event that determination is made in step S5 that live streaming distribution is being performed (YES in step S5), the communication control unit 110 calculates index N of the media segment currently being subjected to live streaming distribution (step S7). Specifically, the communication control unit 110 references a value of the attribute "availabilityTime" of each URL tag between the target Representation start-tag and end-tag. The communication control unit 110 then calculates index N, by identifying the N'th URL tag where the value of the current point-in-time which the built-in clock unit 160 points are equal to above the value of the attribute "availabilityTime" of the Nth URL tag from the top and is less than the value of the attribute "availabilityTime" of the N+1'th URL tag from the top.

After step S7, the communication control unit 110 identifies the URL (in the example of Fig. 3, for example, http://exsample.com/rep2-segN.ts) of the media segments being subjected to on-demand distribution corresponding to the media segment of the index N currently during live streaming distribution (which the distribution server 300 has just started multicast distribution of), by referencing the representation for unicast. The communication control unit 110 then starts processing to receive the media segment corresponding to the media segment of the index N currently being subjected to live streaming distribution with on-demand distribution, by accessing the identified URL (step S8).

After step S8, at the time when the point-in-time to which the built-in clock unit 160 points is the point-in-time which the value of attribute "availabilityTime" of the N+1'th URL tag indicates, the communication control unit 110 transmits a request for participation to the multicast group in order to receive multicast distribution of the target video content to the multicast router 200 (step S9) and advances to step S10. Thus, the playing device 100 starts reception of the media segment of the index N+1, and will sequentially receive the following media segment with multicast distribution.

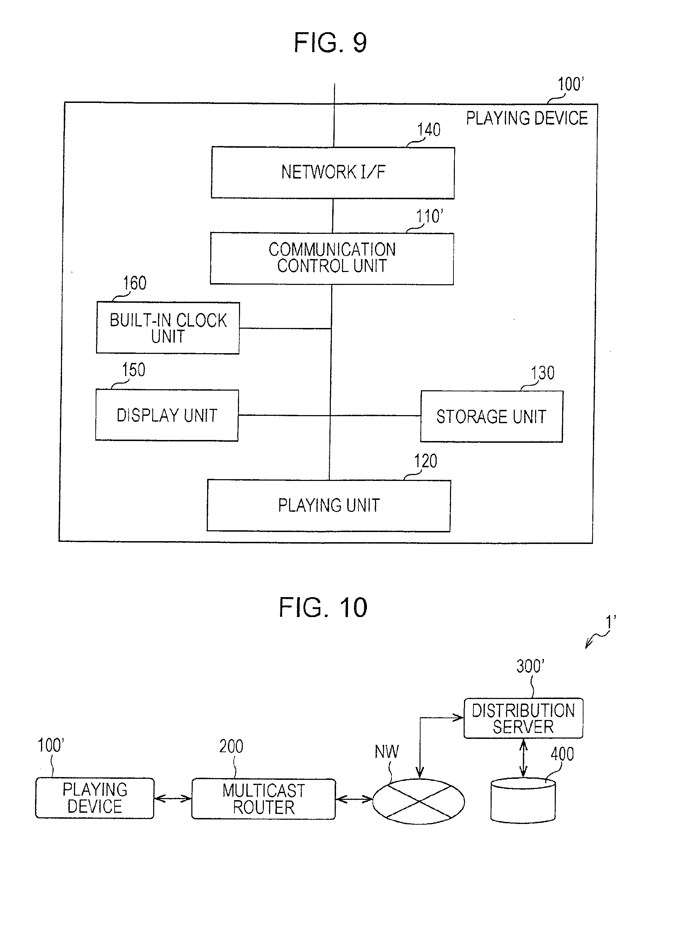

The playing unit 120 starts playing of the live streaming video (step S10), at the point-of-time of completing reception of the video content (media segment) corresponding to the play period indicated by the value of attribute "minBufferTime", from the time point when the reception of the media segment has started in step S4 or step S8. Note that, in the example in Fig. 3, 10 seconds are set to any play period of the media segments (value of attribute "duration" of the SegmentInfoDefault start-tag) and attribute "minBufferTime", and accordingly, starting playing can be enabled at the time when reception of the head media segment (media segment of index N) has been completed.

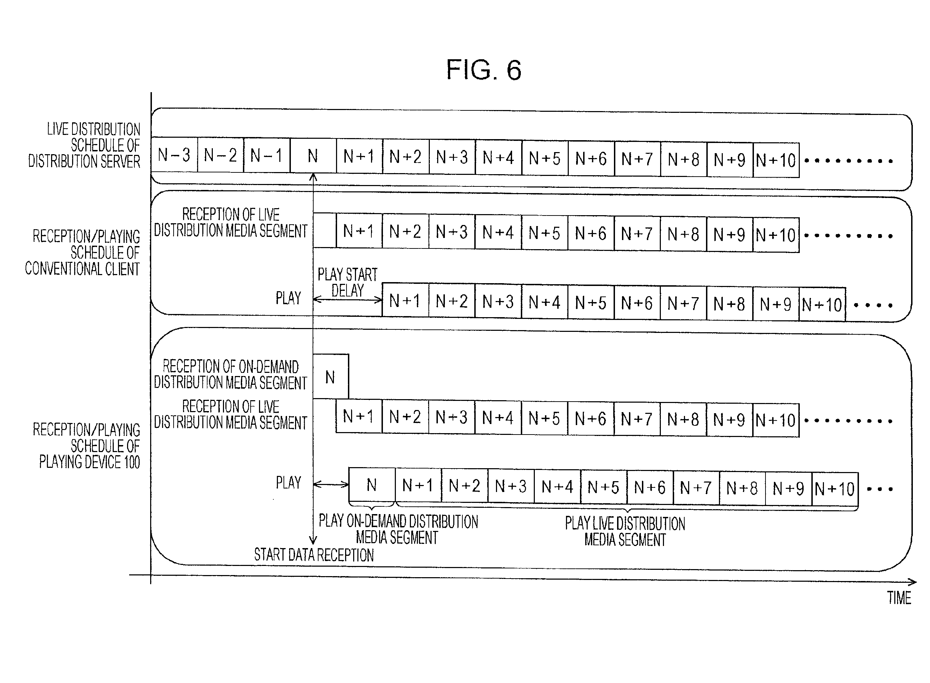

As described above, description has been made regarding operation until the playing device 100 starts playing of the live streaming video, and a timing at which the playing device 100 receives and plays the media segments is illustrated in Fig. 6.

Fig. 6 is a diagram schematically illustrating a temporal relationship of a schedule where the distribution server 300 performs live distribution of media segments by multicast, a schedule where the conventional client receives and plays the media segments distributed by multicast, and a schedule where the playing device 100 receives and plays the media segments. Each square in the diagram illustrates a media segment, and the text within the square indicates the index of the media segment. Note that, as with the description above, description will be made in a case where start of playing can is enabled at the time of the head media segment being received.

As illustrated in Fig. 6, the conventional client device starts reception of the media segments of the index N which is being distributed by the distribution server at the time of receiving the playing instruction from a user, but the actual start of playing is after the time of the reception of the media segment of the index N+1 having been completed. That is to say, the conventional client device discards the media segments of the index N of which the entirety has not been able to be received, and starts playing from the media segments of the index N+1 of which the entirety has been able to be received, and accordingly, the necessary time until the start of playing after receiving playing instruction (delay of start of playing in the drawing) is longer than the time necessary for playing one media segment.

On the other hand, the playing device 100 can start reception of the media segment of the index N being recorded to the NAS 400 to be subjected to on-demand distribution, using unicast communication, at the point-in-time that a playing instruction is accepted from the user. That is to say, the playing device 100 can receive the entirety of the media segment of the index N, thereby starting playing at the time of the reception of the media segment of the index N having been completed. Also, the reception speed of the media segment to be subjected to on-demand distribution can be controlled by the playing device 100, and by the playing device 100 selecting representation of the appropriate bit rate in accordance with the network band which the playing device 100 can use, high-speed reception can be realized as compared with live distribution. Accordingly, the time necessary for playing to start after the playing device 100 has received the playing instruction is under the time necessary for playing a media segment to be performed live distribution, and accordingly is shorter than that of the conventional client device.

Also, in the distribution system using the conventional unicast communication, there is a concentration of accesses from a great number of playing devices immediately after starting distribution of the video content, so the load on the distribution server is enormous, but with the distribution system according to the present invention, the only media segment which the playing device 100 receives by unicast communication is the media segment of the index N, and there is an advantage in that not so much of a load is applied to the network band on the distribution server 300 side and processing of the distribution server 300 itself, even if in the event that a great number of playing devices 100 receive distribution of the target video content from the distribution server 300 at the same time.

(Operation Example 2 of Operation where Playing device 100 Starts Playing of Video Content)

Next, description will be made regarding another operation example of the operation of the playing device 100 until starting playing of the video content.

With the present operation example, an operation different from the operation example 1 is performed in the event that the target video content is subjected to live streaming distribution. That is to say, the playing device 100 has a configuration such that, upon receiving the playing instruction of the video content from a user, media segments are received by unicast communication in order from the top of the target period of the target video content (that is to say, the head media segment of the target period) and time shift play is started. The configuration is also such that, from the point-in-time when the playing instruction has been received, multicast distribution of the live streaming video of the target video content is received at the same time.

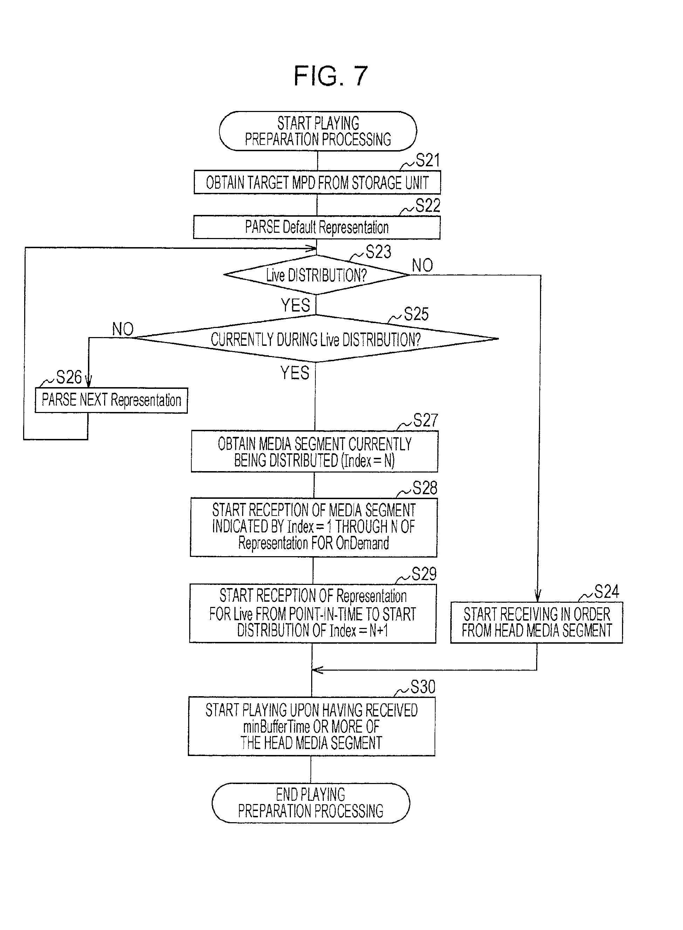

Hereinafter, description will be made regarding the present operation example with reference to Fig. 7. Fig. 7 is a flowchart illustrating the present operation example until the playing device 100 starts playing of the video content.

As illustrated in Fig. 7, upon the playing device 100 having received the playing instruction of the video content via an unshown operating unit from a user, the communication control unit 110 of the playing device 100 reads out the MPD data 5a relating to the target video content which has been received from the distribution server beforehand from the storage unit 130, similar to step S1 in the operation example 1 (step S21). Note that, an arrangement may be made wherein a configuration is made such that the MPD data is not obtained beforehand but received from the distribution server after the playing instruction.

In the following steps S22 through S27 as well, the playing device 100 performs similar operations as with steps S2 through S7 of the operation example 1, and accordingly, description will be made here regarding the operation from step S28 and thereafter.

After step S27, the communication control unit 110 identifies the URL of each media segment from the head media segment of the head period (the media segment of the index 1) to the media segment of the index N currently being subjected to live streaming distribution by multicast, by referencing the representation for unicast. The communication control unit 110 starts processing to receive media segments of the index 1 to N in order to perform time shift play by unicast communication, by accessing the URL of the media segments identified by the ascending order of the indices (step S28).

After step S28, at the time of being the point-in-time which the value of attribute "availabilityTime" of the N+1 URL tag indicates, the communication control unit 110 transmits request for participation to the multi-cast group to multicast router 200 in order to receive multicast distribution of the target video content (step S29) and advances to step S30. Thereby, the playing device 100 starts reception of the media segment of the index N+1 and will sequentially receive the following media segments.

The playing unit 120 starts playing of the live streaming video between from the time at which reception of the media segments has started in step S24 or step S28 to the time at which reception of the video content (media segment) equivalent to the play period which the value of the attribute "minBufferTime" indicates has been completed (step S30).

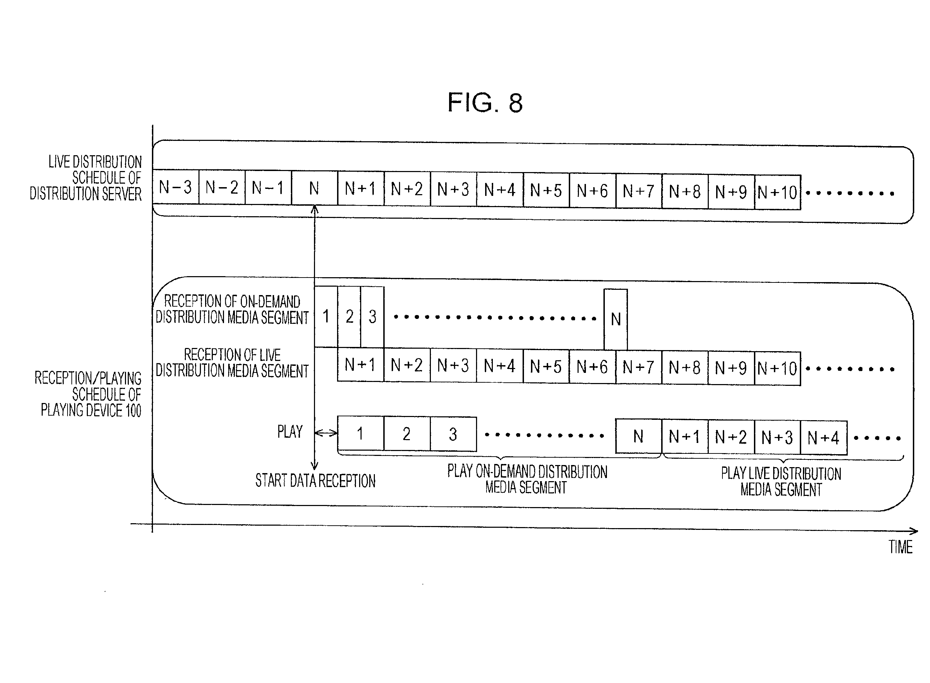

As mentioned above, description has been made regarding the operation until the playing device 100 starts time shift play, and timing of the playing device 100 receiving and playing the media segments is illustrated in Fig. 8.

Fig. 8 is a diagram schematically illustrating a temporal relationship of a schedule where the distribution server 300 distributes the media segments and a schedule where the playing device 100 receives and plays the media segments. Each square in the diagram illustrates one media segment, and the text within the square illustrates the index of the media segment.

As illustrated in Fig. 8, the playing device 100 can start reception of the media segments of the indices 1 to N already recorded or being on the recording in the NAS 400, using unicast communication, at the time of receiving the playing instruction from a user. That is to say, the playing device 100 is to start playing at the time of the reception of the media segment of the index 1 having been completed. Accordingly, the necessary time after the playing device 100 has received the playing instruction until playing starts, is normally under the time necessary for playing a single media segment, which is shorter than that of the conventional client device, as with the operation example 1.

Note that, the playing device 100 may be configured to be able to switch between time shift play is performed when a playing instruction is received from a user, or playing of the live streaming video is performed, in accordance with operation instructions from the user, or may be configured to start playing with either one of the playing methods, and to be able to switch to playing with the other playing method in accordance with in accordance with operation instructions from the user.

For example, with a reception / playing schedule of the playing device 100 illustrated in Fig. 8, at the point in time of receiving the media segment of the index 3 to be subjected to on-demand distribution, the media segments of the indices 1 through 3 and index N+1 have already been received. In this case, the playing unit 120 may sequentially perform playing from the media segment of the index 1, upon receiving the playing instruction of the time shift playing, and upon receiving the playing instruction of real-time play, may perform playing operation so as to sequentially perform playing from the media segment of the index N+1.

The distribution system according to the present embodiment can realize live distribution and on-demand distribution, without changing the necessary time until playing is started from the playing device 100 receiving the playing instruction, and the band of the network on the distribution server 300 side and the load of the distribution server 300 itself, in the event that the playing device 100 performs either of the playing of the live streaming video and time shift play. Therefore, with the distribution system of the present embodiment, unlike with conventional arrangements, there is no need to use multiple distribution systems together, such as digital broadcasting and IPTV by IP multicast being used for effective live distribution and DASH being used for on-demand distribution.

(Appendix 1)

Description has been made regarding operation of the playing device 100 (operation example 1 in accordance with the flowchart in Fig. 5 and operation example 2 in accordance with the flowchart in Fig. 7), assuming that the playing device 100 references MPD data 5a as MPD data in order to start playing of the video content.

The playing device 100 performs operation in accordance with the flowchart in Fig. 5 (or Fig. 7), even in the event that the MPD data to reference so that the playing device 100 starts playing of the video content, is MPD data 5b. However, the operation of the playing device 100 in the event of referencing the MPD data 5b is different from the operation of the playing device 100 in the event of referencing the MPD data 5b, with regard to specific operations to calculate the index N in step S7 (or step S27).

That is to say, the communication control unit 110 will calculate an N satisfying the following expression.

[Math. 1]

$$Stime + (N - 1) \times D \leq curTime < Stime + N \times D$$

Here, Stime: value of the attribute "availabilityTime" of the target Representation start-tag parsed immediately before, D: value of the attribute "duration" of the SegmentInfoDefault start-tag of the target period, and curTime: value of the point-in-time to which the built-in clock unit 160 points. The communication control unit 110 can calculate the same value N as in the event of referencing the MPD data 5a, by calculating an N satisfying the above expression.

(Appendix 2)

Description has been made regarding a configuration to perform multicast distribution by the above RTP for live distribution, but an arrangement may be made wherein a configuration to use another simultaneous transmitting means may be employed. For example, a configuration to perform broadcast distribution using an existing digital broadcast network can be employed. In that case, the playing device includes a digital tuner corresponding to the digital broadcasting in addition to the network I/F 140 for IP networks, and receives the media segments (MPEG-2TS) via the digital broadcast network. Also, data transmitting means to the digital broadcast network are provided, similar to the distribution server. A configuration may be made such that the existing URL notation for digital broadcasting network such as "dvb: //233a.104" is used for a URL indicating video content (media segment) to be subjected to live distribution via the digital broadcasting network, and a digital broadcasting network is used for transmission and reception of the media segment belonging to the representation where such a URL notation has been used.

[Second Embodiment]

Description will be made next regarding a distribution system according to another embodiment of the present invention, with reference to Fig. 9 through Fig. 14.
The distribution system according to the present embodiment is a distribution system to perform live distribution and on-demand distribution on video content to a playing device, similar to the distribution system according to the First Embodiment. On the other hand, the distribution system according to the present invention is different from the distribution system according to the First Embodiment in that, even in a situation where a great delay has occured in communication between the playing device and distribution server, or the current point-in-time of the built-in clock of the playing device is greatly different from the current point-in-time of the built-in clock of the distribution server, appropriate playing of the video content can be achieved.
That is to say, the distribution system according to the First Embodiment does not have a way with which the playing device 100 confirms the index of the media segments received by multicast distribution from the distribution server, and accordingly in the event that the above situation occurs, a situation may occur such that a media segment the same as a media segment received by unicast communication and played is received by multicast communication and played in duplicate, or a part of the media segment cannot be received and played.
The distribution system according to the present embodiment is adapted to be able to play video content as appropriate without trouble such as the playing device playing the same media segment in duplicate or not playing a part of the media segments, as described in detail below.
First, description will be made regarding a configuration of the distribution system according to the present embodiment. Fig. 9 is a diagram illustrating an overall configuration of the playing device according to the present embodiment, and Fig. 10 is a diagram illustrating an overall configuration of the distribution system 1 according to the present embodiment.
As illustrated in Fig. 10, the distribution system 1' is of a system configuration similar to the distribution system 1 of the First Embodiment, but the playing device 100' and distribution server 300' are partly different from the playing device 100 and distribution server 300 of the First Embodiment. In the following, description will be made regarding the configuration of the distribution system 1' mainly regarding the different points thereof, and we will omit description regarding the parts which do not differ.

(Distribution Server 300')

The distribution server 300' sequentially records video from a live camera (not shown) making up the video content in increments of media segments in the NAS400, and in conjunction therewith performs multicast distribution of the target video content. Also, upon receiving an HTTP request of the media segment from the playing device 100', the distribution server 300' performs on-demand distribution on the media segment recorded in the NAS 400 to the playing device 100' by unicast communication.
The distribution server 300' is arranged to record and distribute the media segments, including the index information of the said media segments as meta information of the media segments.

(Playing Device 100')

As illustrated in Fig. 9, the playing device 100' includes a communication control unit 110', a playing unit 120, a storage unit 130, a network I/F 140, a display unit 150, and a built-in clock unit 160. Here, description will be made regarding only the communication control unit 110'.

(Communication Control Unit 110')

The communication control unit 110' receives MPD data (metadata) relating to the video content beforehand from the distribution server 300, and records this in the storage unit 130. Upon accepting a playing instruction of the video content from a user, the communication control unit 110' identifies the distribution point-in-time which the distribution server 300 distributes the media segments making up the target video content, by referencing the recorded MPD data in the storage unit 130. The communication control unit 110' then identifies the media segment to be received in either of on-demand distribution and live distribution from the current point-in-time to which the built-in clock unit 160 points and distribution point-in-time which has been identified regarding the media segments, and transmits an HTTP request for obtaining of the media segment to be subjected to on-demand distribution to the distribution server 300.

Further, the communication control unit 110' transmits a request for multicast distribution of the target video content to the multicast router 200 for obtaining of the media segments to be performed by live distribution.

The communication control unit 110' stores the received media segments in the storage unit 130, and references the index information of the first media segment received by multicast distribution. In the event that the referenced index information is different from the value which has been assumed at the time of requesting, the communication control unit 110' determines that situations will occur such as a part of media segment being obtained in duplicate and a part of the media segment to be obtained not being able to be obtained, by either of on-demand distribution and live distribution, and performs discarding of duplicate portions or request for additional obtaining, regarding such parts of the media segment.

(Operation Example of Operation where Playing device 100' Starts Playing of Video Content)

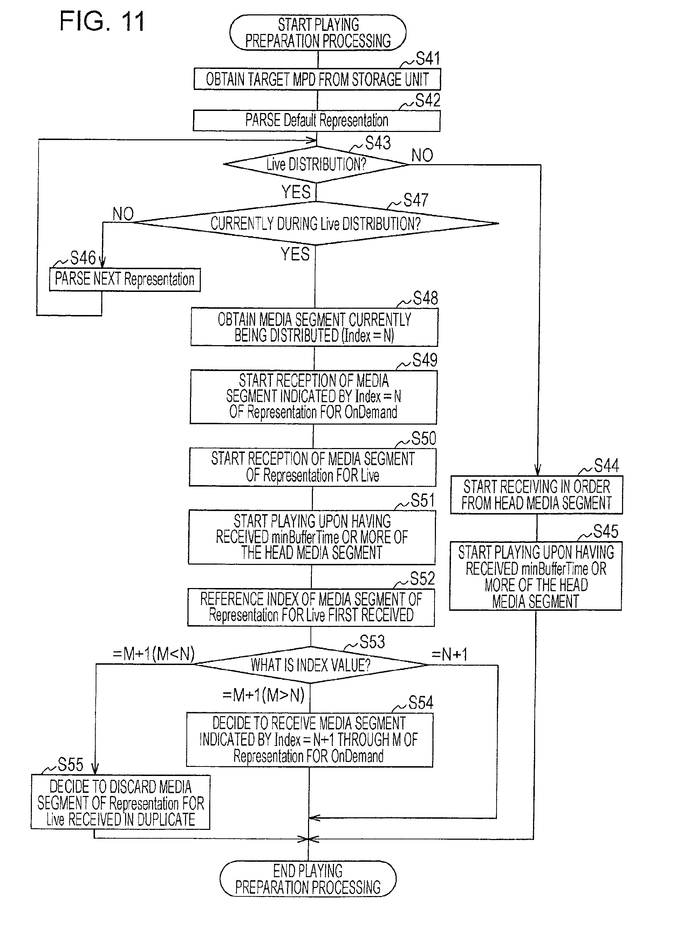

In the following, description will be made with reference to Fig. 11, regarding an operation example of the operation of the playing device 100' until starting playing of the live streaming video of the video content.

Fig. 11 is a flowchart illustrating the operation until the playing device 100' starts playing of the video content.

Processing of step S41 through step S45 is the same processing as with the processing of step S2 through step S4 and step S10 which have already described as the operation example 1 of the playing device 100, and processing of steps S46 through S49, and S51, are the same processing as with the processing of steps S5 through S8, and S10, which have already described, and accordingly, description will be omitted here.

In step S50, the communication control unit 110' transmits a request for participation in the multi-cast group to receive multicast distribution of the target video content to the multicast router 200, at the same time as the processing in step S49, and advances to step S51.

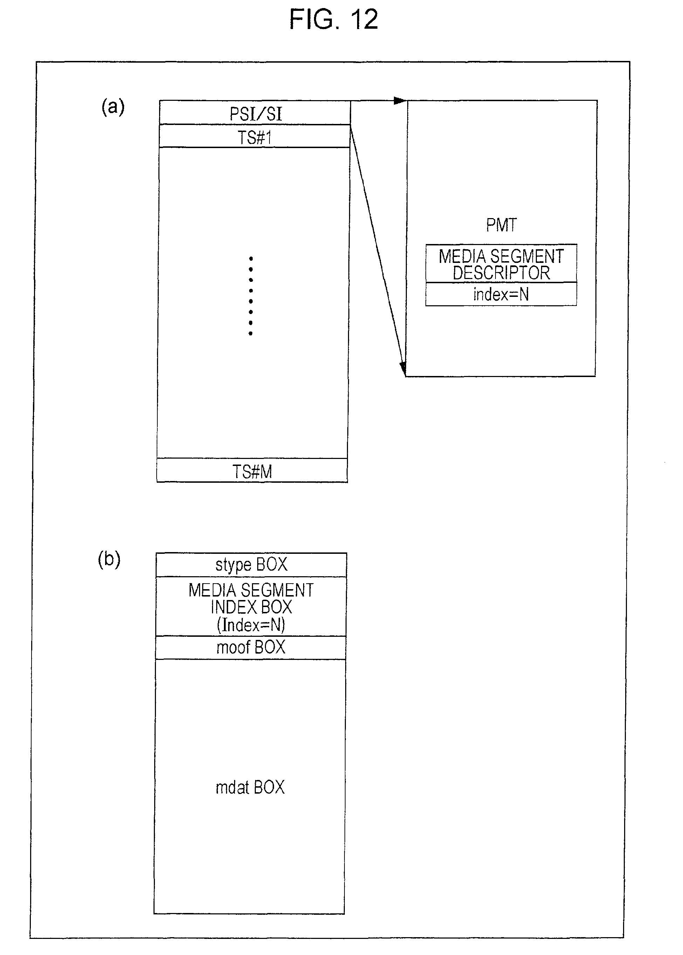

In step S52, the communication control unit 110' then references the index information of the media segments which has been first received by multicast distribution. For example, in the event that the distribution server 300' is to distribute the media segment to the playing device 100' with the MPEG2 - TS format, MPEG2 - TS is distributed in the state that the index N of the media segment is embedded to PMT (Program Map Table), as illustrated in Fig. 12(a). Also, for example, in the event that the distribution server 300' distributes the media segment to the playing device 100' with the MP4 format, MP4 data where the index N of the media segment has been stored in one of the boxes, is distributed, as illustrated in Fig. 12(b).

The communication control unit 110' then determines whether or not the value of the index which has been referenced in step S52 is N+1, greater than N+1, or smaller than N+1 (step S53).

In the event that determination is made that the value of the index is N+1 ("= N+1" in step S53), duplication or lack of the media segments to be received does not occur, so the processing ends. On the other hand, in the event that the value of the index M+1 is greater than N+1 ("=M+1 (M>N)" in step S53), the processing advances to step S54, and in the event that the value of the index M+1 is smaller than N+1 ("=M+1 (M<N)" in step S53), and advances to step S55.

In step S54, the communication control unit 110' further determines that reception lack of the (M-N) media segments (each media segment of the index N+1 through index M) will occur and performs additional request for obtaining by on-demand distribution, and ends the processing.

Also, in step S55, the communication control unit 110' also determines that the (M-N) media segments to be received (each media segment of the index M+1 through index N) are received in duplicate in both of on-demand distribution and live distribution, and the communication control unit 110' decides to discard one of them (media segment to be performed live distribution by multicast for example), and ends the processing.

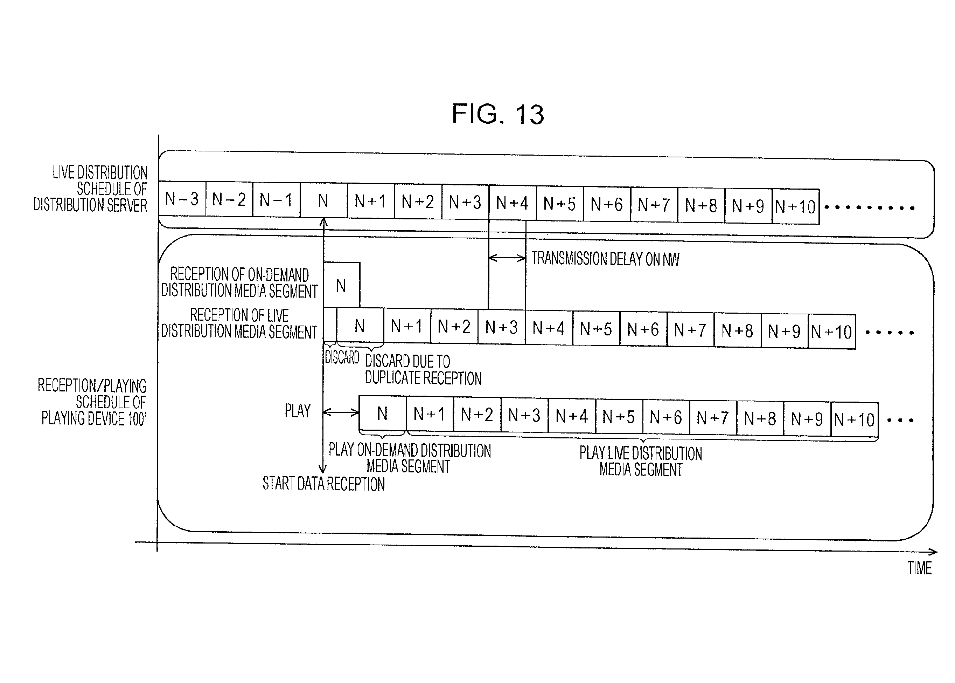

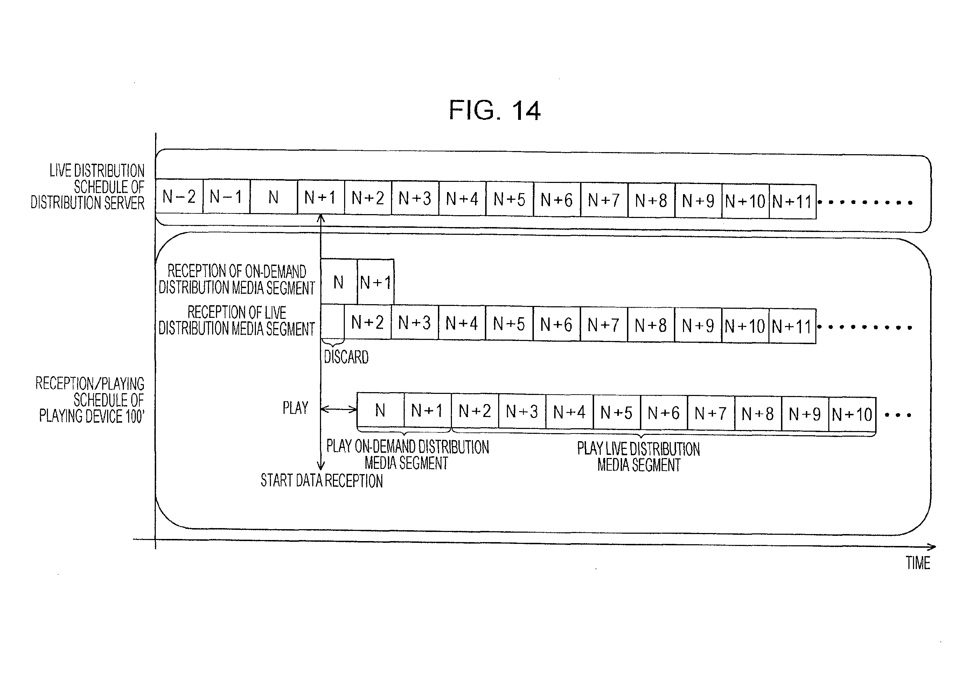

Operations until the playing device 100' starts playing of the live streaming video have been described above, and examples of timing where the playing device 100' receives and plays the media segments are illustrated in Figs. 13 and 14.

Figs. 13 and 14 are diagrams schematically illustrating a temporal relationship between a schedule where the distribution server 300'distributes a media segment and a schedule where the playing device 100' receives and plays the media segments.

Fig. 13 is an example of a schedule in the event that there is a great delay in communication at the network NW between the distribution server 300' and multicast router 200, and in the event that another playing device receiving multicast distribution of the target video content via the multicast router 200, has been already existing in the same subnet as with the playing device 100'.

In the event that there is a great delay in communication between the distribution server 300' and multicast router 200, the multicast router 200 transfers the media segment of the index M (M<N) to the other playing device described above, at the timing that the distribution server 300' distributes the media segment of the index N.

Upon the playing device 100' accepting a playing instruction of the video content from a user at this timing, the index of the media segments which the playing device 100' first receives by multicast distribution in step S49, is M+1 (M+1 = N in Fig. 13). That is to say, the playing device 100' receives in duplicate the media segment of the index N by the live distribution and on-demand distribution.

However, the playing device 100' detects receiving in duplicate by the processing of steps S52 and S53, and discards one of these by the processing in step S55. Accordingly, the playing device 100' can play a live streaming video as appropriate, as illustrated in Fig. 13, without playing the media segment of the index N in duplicate (i.e., playing a part of video of the video content twice).

Fig. 14 is also an example of a schedule of a case where the built-in clock of the distribution server 300' keeps the correct point-in-time and the built-in clock unit 160 of the playing device 100' is markedly delayed as to the correct point-in-time.

In this case, the point-in-time which the built-in clock unit 160 points to is delayed, and so, the value of the index N which has obtained in step S58 is a smaller value than the index of the media segment M (M = N+1 in Fig. 14) where the distribution server 300' is actually being distributed.

That is to say, in step S49, the index of the media segment which the playing device 100' first receives by multicast distribution is M+1 (N+2 in Fig. 14), and the (M-N) media segments (each media segment of the index N+1 through index M) cannot be received.

However, the playing device 100' detects being incapable of receiving the assumed part of the media segments (N+1 in Fig. 14) by multicast distribution by the processing of steps S52 and S53, and decides to receive the above part of the media segments by DASH by the processing of step S54. Thereby, the playing device 100' can play live streaming video as appropriate, as illustrated in Fig. 14, without trouble occurring that a part of the media segments cannot be played (i.e., a part of the video in the video content skipped in the playing).

(Appendix 3)

Note that, the playing device 100' can perform time shift play of the target video content, as with the operation example 2 of the playing device 100 of the First Embodiment. Also, the playing device 100' can perform time shift play as appropriate, even in the situation that a great delay occurs in communication between the playing device and distribution server, and the current point-in-time of the built-in clock of the playing device greatly differs from the current point-in-time of the built-in clock of the distribution server.

To this end, the communication control unit 110' may detect that the same media segment has been received in duplicate by multicast distribution and DASH, and a part of the media segment cannot be received with multicast distribution, by performing the processing in steps S52 and S53 with the playing device 100'described above.

In the event of thus detecting that the same media segment is received in duplicate, a decision may be made such that the media segment received with multicast distribution in duplicate is to be discarded, as with step S55.

Also, the event of detecting that a part of the media segment cannot be received with multicast distribution, the communication control unit 110' may decide to perform additional reception of the media segments of the index N + 1 through M with on-demand distribution by unicast communication, as with step S54, in addition to the media segments of the indices 1 through N.

(Appendix 4)

With the Second Embodiment, the distribution server 300' has caused the playing device 100' to identify the index of the media segments to perform multicast distribution to the playing device 100', by including index information inside of the media segment as meta information of each media segment.

The distribution server 300' may operate as with the following, so as to identify the index of the media segment to the playing device 100'.

That is to say, the distribution server 300' can distribute the media segments to the playing device 100' by RTP packet format, by dividing and storing the media segments in the RTP payload portion of RTP packets (data for distribution). In this case, the distribution server 300' may distribute each RTP packet after storing the index (identifier) of the corresponding media segment to the RTP extended header, regarding RTP packets where the head portion of each media segment is stored in the RTP payload.

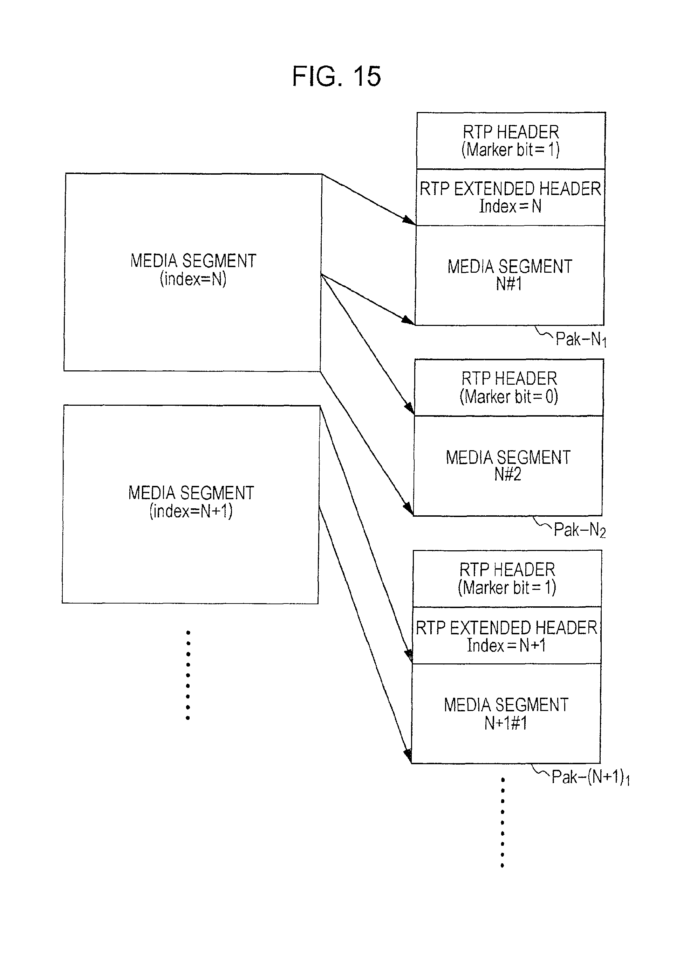

Fig. 15 illustrates a portion of RTP packet groups where the distribution server 300' distributes to the playing device 100' with multicast distribution. As for Fig. 15, the distribution server 300' may distribute RTP packets Pak-$N_1$, RTP packet Pak-$N_2$, RTP packet Pak-$(N+1)_1$, after storing the corresponding index in the RTP extended header of the RTP packets, regarding each RTP packets where the RTP packet Pak-$N_1$ where the head portion of the media segment of the index N is stored and the RTP packet Pak- $(N+1)_1$ where the head portion of the media segment of the index N+1 is stored.

In the event that index information is embedded inside of the media segment as meta information, overhead will occur equivalent to the embedded meta information at the time of storing media segments in the playing device, but the RTP packet header is discarded at the time of reception, and accordingly there is an advantage that overhead does not occur.

(Appendix 5)

Also, time information (identifier) such as distribution start point-in-time, playing start point-in-time, or the like of the media segments may be used, instead of storing an index of the media segment described in the MPD data, inside of the media segment or inside of the RTP packets header, as meta information to identify a media segment.

The distribution start point-in-time of the media segment is described in attribute "availabilityTime" in the MPD data with UTC, as described above. Alternatively, this can be derived using attribute "availabilityStartTime" or the like. Accordingly, it is obvious that identifying a media segment can be enabled based on the meta information, if the distribution start point-in-time of the media segments indicated in the UTC is stored instead of the indices of the media segments, inside of the media segments or inside of the RTP packet header, as meta information. Also, the play starting point-in-time of each media segment, which can be derived based on each attribute in the MPD data, as meta information, can be used.

Alternatively, time information which originally exists in a media segment can be used. With the MPEG-2TS, time information such as point-in-time of decoding, play point-in-time, or the like, is managed by the PCR expressed in terms of 90 KHz counter values, and accordingly, direct comparison between the PCR value and time information in the MPD data which is based on the UTC cannot be performed. However, for example, by describing the value of the head PCR of the head media segment of each period as a new attribute of "SegmentInfo" of the representation, an elapsed time from the period top can be obtained in comparison with the PCR of the received media segment and the media segment corresponding to the obtained elapsed time can be identified. Note that generating of the MPD data is performed ahead of the live distribution of the video content, and accordingly it is conceivable that there is a case where obtaining the PCR value of the period top which is set at the time of generating MPEG-2TS data is difficult when generating the MPD data. Accordingly, a distribution server is configured so as to be able to receive, after MPEG-2TS packets including the PCR of the period top has been generated, only MPEG-2TS packet including the PCR with on-demand distribution, unlike with multicast distribution, and an arrangement may be further made wherein the URL which performs on-demand distribution of the MPEG-2TS packets instead of the PCR value of the period top to the MPD data is described as a new attribute of "SegmentInfo". Alternatively, an elapsed time from the period top can be obtained at the time of receiving the media segment without adding a new attribution to the MPD data, even if storing the PCR value of the period top as meta information to the media segments, and the received media segment can be identified, and accordingly, sequential playing of the sequence of media segments can be enabled.

(Third Embodiment)

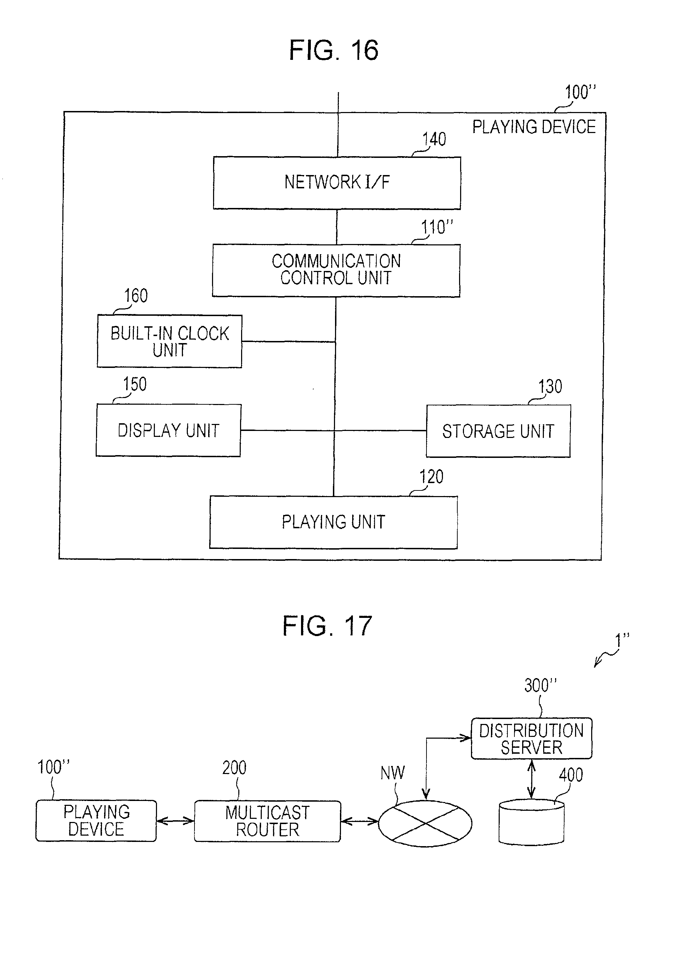

Next, description will be made regarding a distribution system according to another embodiment of the present invention with reference to Fig. 16 through Fig. 21.

The distribution system according to the present embodiment is a distribution system to perform live distribution on the video content to the playing device, similar to the distribution system according to the First Embodiment and Second Embodiment.

First, description will be made regarding a configuration of a distribution system according to the present embodiment. Fig. 16 is a diagram illustrating an overall configuration of the playing device according to the present embodiment, and Fig. 17 is a diagram illustrating an overall configuration of the distribution system 1" according to the present embodiment.

As illustrated in Fig. 17, the distribution system 1" is a system configuration similar to the distribution system 1' of the Second Embodiment, but the playing device 100" and distribution server 300" are partly different from the playing device 100' and distribution server 300' of the Second Embodiment. In the following, description will be made regarding the configuration of the distribution system 1", mainly regarding differences, and we will omit description regarding the parts which do not differ.

(Distribution Server 300")

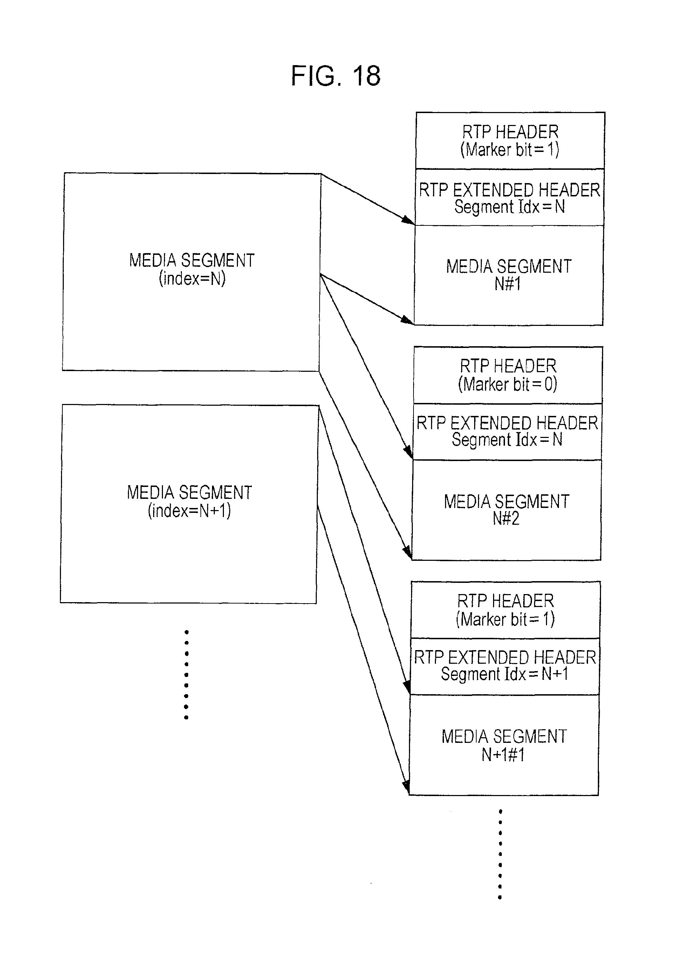

The distribution server 300" divides and stores each media segment in the RTP payload part of the RTP packets, similar to the configuration described in appendix 4 of the distribution server 300'. However, as illustrated in Fig. 18, the distribution server 300" stores the indices of the media segments where a part thereof (partial data) is stored in the RTP payload, regarding all RTP packets as SegmentIdx variable values of the RTP extended header. This point is different from the configuration of the appendix 4 in that indices are stored only in the RTP extended header of the RTP packets where the head portion of the media segment is stored in the RTP payload.

(Playing Device 100")

As illustrated in Fig. 16, the playing device 100" includes a communication control unit 110", a playing unit 120, a storage unit 130, a network I/F 140, a display unit 150 and an built-in clock unit 160. Here, description will be made regarding only the communication control unit 110".

(Communication Control Unit 110")

The communication control unit 110" receives MPD data (metadata) relating to the video content from the distribution server 300" beforehand and records this in the storage unit 130. Upon accepting a playing instruction of the video content from a user, the communication control unit 110" references the MPD data, and transmits the request of multicast distribution of the target video content to the multicast router 200. The communication control unit 110" then references the index stored in the RTP extended header of the RTP packets to identify the media segments to be received by on-demand distribution.

(Operation Example of Operation where Playing device 100" Starts Playing of Video Content)

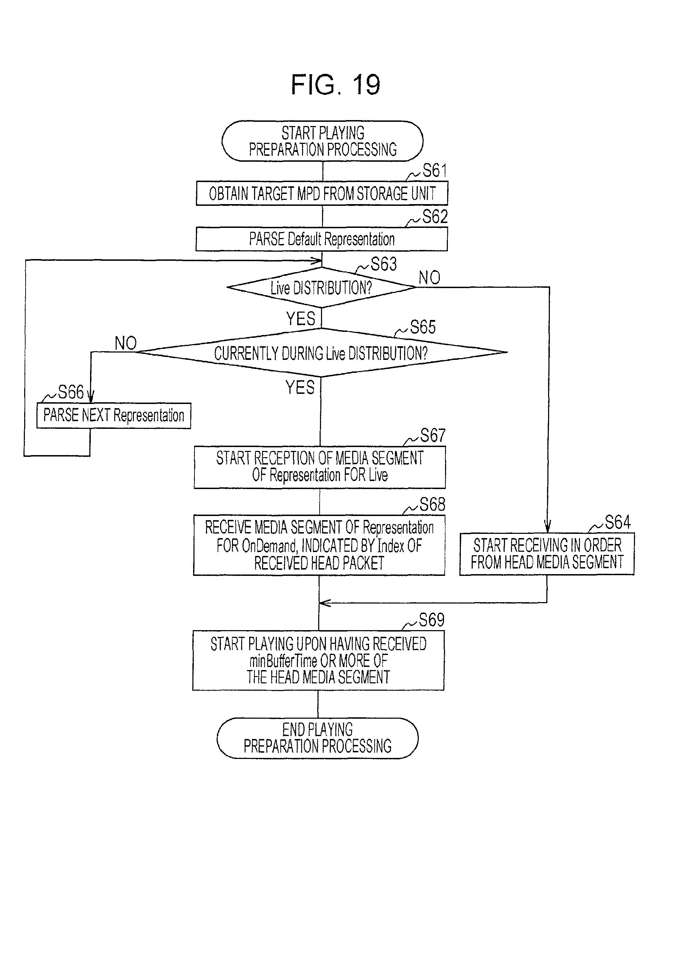

In the following, description will be made regarding an operation example of the operation of the playing device 100" until starting playing of the live streaming video of the video content, with reference to Fig. 19.
Fig. 19 is a flowchart illustrating operations until the playing device 100" starts playing of the video content.
Processing of step S61 through step S66 is the same processing as with the processing of step S2 through step S6 which has already been described as the operation example 1 of the playing device 100, and accordingly, description will be omitted here.
In the event of YES in step S65, the communication control unit 110 transmits the request for participation to the multicast group to the multicast router 200 to receive multicast distribution of the target video content (step S67).
The playing device 100" starts reception of the RTP packets making up a live streaming video by the processing in step S67, and when first RTP packets are received, the playing device 100" references the index included in the RTP extended header of RTP packets. In the event that the value of the referenced index is N, the communication control unit 110" identifies the URL of the media segment of the index N by referencing the representation for unicast. The communication control unit 110" starts processing to receive the media segment of the index N with on-demand distribution by accessing the identified URL (step S68).
Between from the time when reception of the media segment has started in step S64 or step S68, at the time when the reception of the video content (media segment) corresponding to the play period which a value of attribute "minBufferTime" indicates has been completed, the playing unit 120 starts playing of the live streaming video (step S69).
As described above, with the present embodiment, there is no need to identify the detailed distribution point-in-time each media segment based on MPD data to identify the media segment to be obtained with on-demand distribution. In other words, the playing device 100" can identify the media segment to be received with on-demand distribution, even if the distribution point-in-time of the media segments is not described in the MPD data.

(Modification of Playing Device 100" and Distribution Server 300")

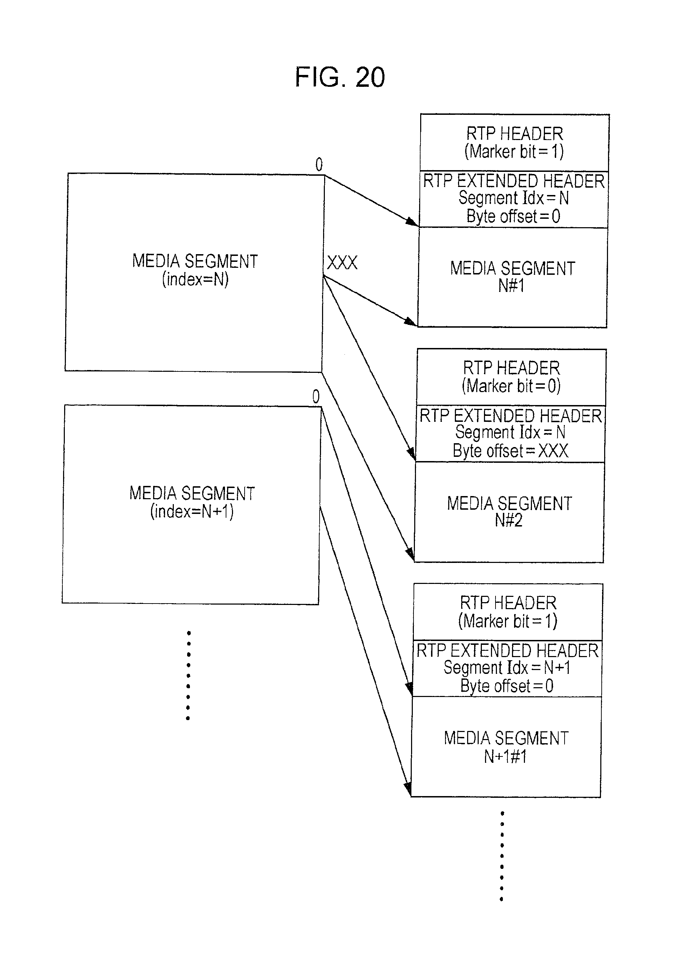

Note that, the playing device 100" and distribution server 300" may be configured to operate as in the following. Note that, with the following description, the distribution server 300" is an example of a case where the distribution server 300" is configured with two representations of which the distribution method is only different regarding on-demand distribution by unicast and live distribution by multicast.
As illustrated in Fig. 20, the distribution server 300" may store a byte offset value of the media segments as well as the index of the media segment in the RTP extended header, regarding each RTP packet. That is to say, in the event that the byte data from the head of the media segment N to the XXX'th byte as the head byte of the RTP payload is stored, the distribution server 300" may store not only the index N as a value of SegmentIdx variable, but also a byte offset value XXX as a value of ByteOffset variable.

The playing device 100" may be configured to, in the event that the head byte of the RTP payload included in the first RTP packet to be received by multicast distribution is data from the head of the media segment of the index N through the XXX'th byte, partly obtain only data before the XXX'th byte of the media segment, rather than of the overall media segment of the index N received by on-demand distribution.

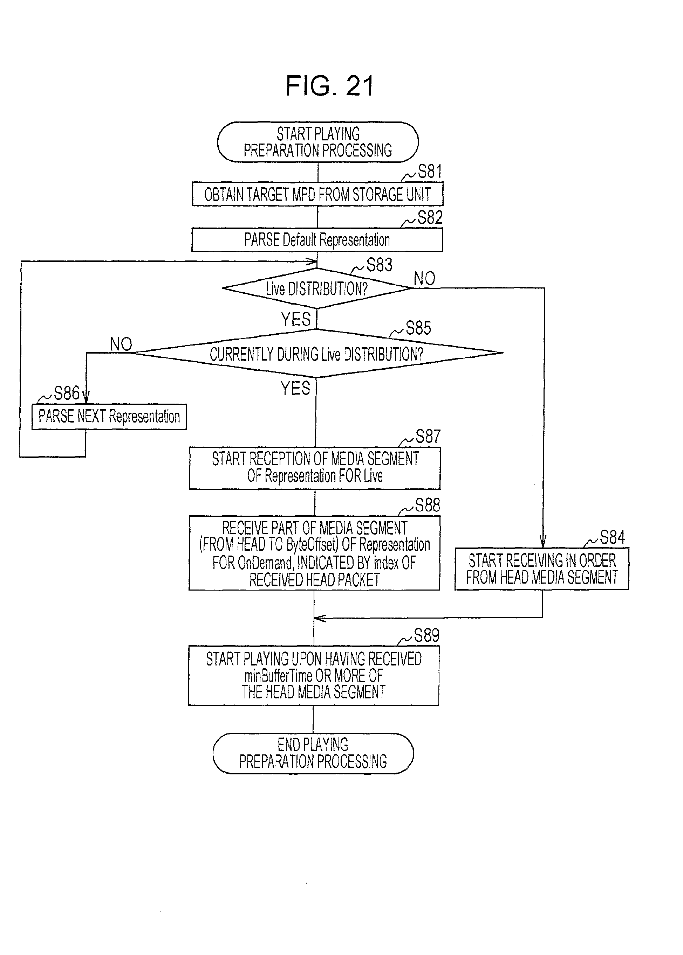

Fig. 21 is a flowchart which illustrates operations relating to a modification, until the playing device 100" starts playing of the video content.

As it understood from Fig. 21, the only point where the flowchart in Fig. 21 differs from the flowchart in Fig. 19 is step S88. That is to say, operations relating to the  modification of the playing device 100" are the same as the operations of the playing device 100" described using the flowchart of Fig. 19, except for step S88 which will be described in the next paragraph.

In step S88, the index and byte offset value included in the RTP extended header of the first RTP packets received by the processing of step S87 are referenced. In the event that the value of the referenced index is N, the communication control unit 110" identifies the URL of the media segment of the index N by representing the representation for unicast. The communication control unit 110" then starts processing to receive the media segment of the index N by HTTP, by accessing the identified URL. At the time of receiving data up to the XXX'th byte, which is the byte offset value, the communication control unit 110" stops reception processing. Alternatively, an HTTP request may be performed to obtain the data to the XXX'th byte which is the byte offset value using an http byte range assignment.

According to the operations relating to the modification, the playing device 100" combines the data up to the XXX'th byte which has been received by HTTP and the data after the XXX'th byte which has been received by multicast distribution, thereby playing the media segment of the index N.

That is to say, the playing device 100" can perform efficient reception processing without receiving a part of the media segment of the index N (data after the XXX'th byte) with on-demand distribution and live distribution in duplicate.

(Advantages of Each Playing Device 100,100' and 100" According to Embodiments 1 through 3)

As described above, upon accepting a playing instruction from a user, each playing device 100 (100' and 100") sequentially plays while obtaining, from the distribution server 300 (300' and 300"), multiple media segments formed by the stream video to be played having been subjected to time division.

In each playing device, the communication control unit 110 (110' and 110") receives the part of the media segments (one or N segments) regarding which a distribution server has already performed multicast distribution by DASH from a distribution server. Also, the communication control unit receives the remaining media segments from the distribution server, received by multicast distribution.

In each playing device, the media segment where the playing unit 120 has received first by unicast communication is played first.

The communication control unit further starts processing of receiving the part of the media segment, at the time of starting processing to receive the remaining media segments upon having received multicast distribution, or before this time, or immediately after this time.

That is to say, each playing device can start playing of the streaming video earlier than the timing where the conventional client device, which plays streaming video after receiving only multicast distribution, starts playing of the video. Also, each playing device receives by DASH not only all the media segments to make up the streaming video, but also a part of the media segment, and accordingly even in the event that the number of the playing devices receiving distribution  of the streaming video is increased, band load of the network on the distribution server side and processing load of the distribution server can be suppressed.

As described above, while suppressing the band load of the network on the distribution server side and processing load of the distribution server, each playing device can start playing of contents with a short waiting time.

(Others)

Note that, the present invention can be realized not only as a video playing device to play video content, but also an audio playing device to play audio content, for example.

The playing device in each embodiment does not need to be configured so as to reference point-in-time from a built-in clock. That is to say, a configuration may be made such that point-in-time information is obtained from an external time server (unshown) to reference the point-in-time.

(Program and Storage Medium)

Each block of the playing device 100 (100' and 100") may be realized hardware-wise by a logic circuit formed on an integrated circuit (IC chip), or may be realized software-wise by a CPU (Central Processing Unit).

In the latter case, a CPU to execute an instruction to implement each function of the program, ROM (Read Only Memory) storing the program, RAM (Random Access Memory) to which the program is loaded, and a storage unit (recording medium) such as memory storing the above program and various data, are included in the playing device 100 (100' and 100"). The object of the present invention can be achieved by supplying, to the playing device 100 (100' and 100"), a recording medium in which is recorded, in a computer-readable format, program code (executable format program, intermediate code program, and source program) of a control program of the playing device 100 (100' and 100") which is software to implement the function, and by the computer (or CPU or MPU) executing reading out and executing the program code recorded in the recording medium.

For example, as for the recording medium, tapes such as a magnetic tape, or a cassette tape, and so forth, disks including magnetic disc such as floppy (registered trademark) disks / hard disks, or optical discs such as CD-ROM / MO / MD / DVD / CD-R, and so forth, cards such as IC cards (including memory cards) / optical cards, semiconductor memory such as mask ROM / EPROM / EEPROM (registered trademark) / flash ROM, or logic circuits such as PLD (Programmable logic device) or FPGA (Field Programmable Gate Array), can be used.

The program code may also be supplied to the playing device 100 (100' and 100") via a communication network. This communication network may be able to transmit program code, and is not restricted in particular. For example, the Internet, an Intranet, Extranet, LAN, ISDN, VAN, CATV communication network, virtual private network (Virtual Private Network), telephone network, movable communication network, satellite communication network, or the like, are available. Also, the transmission medium making up this communication network may be a medium which can transmit a program code, and is not restricted to a particular configuration or kind. For example, cable systems such as IEEE1394, USB, power-line carrier, cable TV line, phone line, and ADSL (Asymmetric Digital Subscriber Line) line, and wireless systems such as infrared-ray as with IrDA or wireless remote controllers, Bluetooth (registered trademark), IEEE 802.11 wireless, HDR (High Data Rate), NFC (Near Field Communication), DLNA (Digital Living Network Alliance), cellular telephone network, satellite channel, and terrestrial wave digital network, are available.

Note that, it should be considered that the embodiments disclosed herein are exemplary in all respects and not restrictive. The scope of the present invention is indicated by not only the above description but also the Claims, and it is intended to include all modification within the scope and meaning equivalent to the Claims.

As described above, the content playing device according to the present invention is a content playing device to, upon accepting a playing instruction from a user, sequentially play a plurality of time division data regarding which content data to be played has been subjected to time division, while obtaining the time division data from a distribution server, including: first obtaining means configured to obtain by unicast communication from the distribution server, of the plurality of time division data, a part of the time division data regarding which the distribution server has already performed multicast distribution; second obtaining means configured to obtain by receiving multicast distribution from the distribution server, of the plurality of time division data, the remaining time division data to be played following the part of the time division data; and playing means configured to first play the time division data which the first obtaining means has first obtained, out of the plurality of time division data;, in which the first obtaining means is preferably configured so as to start processing to obtain the part of time division data, before the point in time when the second obtaining means starts processing to obtain the remaining time division data (i.e., at the point in time or before the point in time).

With the content playing device according to the present invention, preferably, the time division data is configured from data to be played having a plurality of differing qualities; and the playing means are configured so as to sequentially play, while obtaining from the distribution server, data to be played of any one quality making up the time division data, regarding each of the plurality of time division data to be played.

According to the above configuration, the content playing device according to the present invention has a further advantage to select and play the data to be played with the optimal quality in accordance with the situation of processing capabilities of the content playing device and the band load of the network with the distribution server at the time of playing the time division data.

The content playing device according to the present invention preferably further includes: third obtaining means configured to obtain metadata relating to the content data, regarding which the content playing device can identify the distribution point-in-time at which the distribution server performs multicast distribution of the time division data, regarding each of the plurality of time division data, ahead of obtaining of the content data; and point-in-time monitoring means configured to monitor point-in-time which a timer points to; wherein the first obtaining means are configured so as to obtain the part of time division data which has been subjected to multicast distribution immediately near the point-in-time to which the timer points when accepting the playing instruction, based on a distribution point-in-time which has been identified from the metadata; and wherein the second obtaining means are configured to start processing to obtain the remaining time division data, when the timer has pointed to the distributed point-in-time at which the time division data is to be first distributed after starting processing where the first obtaining means obtain the part of time division data, based on the distribution point-in-time identified from the metadata.

According to the above configuration, with the content playing device according to the present invention, processing to obtain the remaining time division data is started at the timing when the distribution server distributes time division data after the point in time when the playing instruction has accepted, and accordingly has a further advantage to be able to suppress wasteful processing in which only a part of the time division data immediately after the playing instruction has accepted is obtained and discarded because of failing to play.

The content playing device according to the present invention preferably further includes: duplicate obtaining determination means configured to determine whether or not the second obtaining means obtain in duplicate at least any one of one or more time division data making up the part of time division data obtained by the first obtaining means, in addition to the remaining time division data to be played; wherein, regarding each of the plurality of time division data, an identification value to identify the time division data is correlated to the time division data and an identification value to identify the time division data is included in the metadata; and wherein the duplicate obtaining determination means are configured so that determination is made that the second obtaining means obtain in duplicate, limited to the case where the identification value correlated to the first time division data which the second obtaining means obtain after the timer has pointed to the distribution point-in-time, is smaller than the identification value of the time division data which can be identified from the metadata upon having been distributed at the distribution point-in-time; and wherein, in the event that the duplicate obtaining determination means determine that at least one of the one or more time division data is obtained by the second obtaining means, the playing means do not play one of the same time division data which has obtained by both the first obtaining means and second obtaining means.

Here, for example, in the event that there is a great delay in transmission of the time division data to the content playing device from the distribution server, there are some situations where the content playing device obtains, receiving multicast distribution after the point in time when the playing instruction has accepted, the part of the time division data regarding which the distribution server has already performed multicast distribution.

According to the above configuration, the content playing device according to the present invention has a further advantage to prevent trouble in playing, from playing the same time division data which has been obtained twice, by both of unicast communication and multicast distribution in this situation.

The content playing device according to the present invention preferably further includes: third obtaining means configured to obtain metadata relating to the content data, regarding which the content playing device can identify the distribution point-in-time at which the distribution server performs multicast distribution of the time division data, regarding each of the plurality of time division data, ahead of obtaining the content data; point-in-time referencing means configured to reference the point-in-time when the timer points; and determination means configured to determine whether or not, of time division data of which a distribution point-in-time identified by the metadata is after the point-in-time to which the timer points at the point in time the playing instruction has been accepted, time division data which has already been subjected to multicast distribution exists; wherein, regarding each of the plurality of time division data, an identification value to identify the time division data is correlated to the time division data, and an identification value to identify the time division data is included in the metadata; and wherein the determination means are configured so that determination is made that the time division data which has already performed multicast distribution exists, limited to the case where the identification value correlated to the first time division data which the second obtaining means obtains after the timer has pointed to the distribution point-in-time, is greater than the identification value of the time division data which can be identified from the metadata upon having been distributed at the distribution point-in-time; and wherein the first obtaining means obtain, by unicast communication, not only time division data where the distribution point-in-time identified from the metadata is before the point-in-time to which the timer points, but also the identified distribution point-in-time is after the point-in-time to which the timer points.

Here, in the event that the point-in-time to which the timer points is behind the accurate point-in-time, even with divided data of which the distribution point-in-time identified by the metadata is to be after the point-in-time to which the timer points at the point in time of accepting the playing instruction, there may be cases where multicast distribution has already been performed at that point in time.

According to the above configuration, the content playing device according to the present invention obtains by unicast communication the divided data which has already been subjected to multicast distribution, which is divided data where the identified distribution point-in-time is after the point-in-time to which the timer points, regarding which multicast distribution was received but could not be obtained.

Accordingly, the content playing device according to the present invention has a further advantage to prevent trouble of not being able to play a part of the division data while playing the content data.

The distribution server is preferably configured so that, regarding each of the plurality of time division data, a plurality of RTP packets individually storing a plurality of partial data obtained by dividing the time division data, where an identifier to identify time division data is stored in each RTP packet, are subjected to multicast distribution, and with the content playing device according to the present invention, the second obtaining means are preferably configured so as to obtain from the distribution server a plurality of RTP packets to be subjected to multicast distribution after the point in time when the playing instruction has been accepted, with the first obtaining means being configured so as to obtain,

from the distribution server by unicast communication, time division data to be identified by identifiers included in the RTP packets which the second obtaining means has first obtained, and with the playing means generating and playing a plurality of time division data from a plurality of RTP packets which the second obtaining means has obtained, after playing time division data where the first obtaining means have obtained.

According to the above configuration, the content playing device according to the present invention identifies the above part of time division data to be obtained by the above obtaining means from an identifier to identify the time division data stored in the RTP packets which the second obtaining means have obtained.

Accordingly, the content playing device according to the present invention has a further advantage of being able to identify the part of the time division data to be obtained by the first obtaining means, without referencing metadata relating to the content data.

With the content playing device according to the present invention, preferably, the first obtaining means obtain only a part of the partial data which is not stored in any of the plurality of RTP packets which the second obtaining means have obtained, out of all partial data making up the time division data to be identified by identifiers included in the RTP packets which the second obtaining means have first obtained, with the playing means sequentially playing each partial data stored in a plurality of RTP packets which the second obtaining means have obtained, after sequentially playing one or more partial data making up the part of the partial data.

According to the above configuration, the content playing device according to the present invention plays, after a part of partial data which the first obtaining means has obtained, the remaining partial data of the time division data to be played from the identifier, and sequentially plays the later time division data.

Accordingly, the content playing device according to the present invention has a further advantage to be able to play the content data to be played, without obtaining the entirety of the time division data which is identified by the identifier.

The distribution system including the content playing device and the distribution server connected to the content playing device capable of distributing content data to the content playing device, are encompassed in the scope of the present invention.

Also, a program causing a computer to operate as the content playing device according to the present invention, causing the computer to function as each of the above means, and a computer-recordable recording medium where such a program is recorded, are encompassed in the scope of the present invention.

Further, a data structure of metadata, relating to content data to be divided by time division into a plurality of time division data and distributed, the content data being distributable by a distribution server by both distribution formats of unicast communication and multicast distribution; wherein a distribution point-in-time where the distribution server performs multicast distribution of the time division data regarding each of the plurality of time division data, and a URL to be referenced in order to obtain the time division data by unicast communication from the distribution server, are identifiably described, is encompassed in the scope of the present invention.

Further, a data structure of data for distribution, in the event that a distribution server distributes, using at least one of content data divided by time division into a plurality of time division data and distributed; wherein the time division data and an identifier to identify the time division data are correlated and recorded, regarding each of the one or more time division data, is encompassed in the scope of the present invention.

Industrial Applicability

The content obtaining device according to the present invention can be widely applied such as a playing device.
Reference Signs List
| | |
|---|---|
| 5a, 5b | MPD data |
| 100, 100', 100" | playing device (content playing device) |
| 110, 110', 110" | communication control unit (the first obtaining means, the second obtaining means, the third obtaining means, point-in-time monitoring means, point-in-time referencing means, determination means, obtaining in duplicate determination means) |
| 120 | playing unit (playing means) |
| 130 | storage unit |
| 140 | networks, I/F |
| 150 | display unit |
| 160 | built-in clock unit (timer) |
| 200 | multicast router |
| 300, 300', 300" | distribution server |
| 400 | network storage servers (NAS) |

**Claims**

1. A content playing device to, upon accepting a playing instruction from a user, sequentially play a plurality of time division data regarding which content data to be played has been subjected to time division, while obtaining the time division data from a distribution server, the content playing device comprising:

   first obtaining means configured to obtain by unicast communication from the distribution server, of the plurality of time division data, a part of the time division data regarding which the distribution server has already performed multicast distribution;
   second obtaining means configured to obtain by receiving multicast distribution from the distribution server, of the plurality of time division data, the remaining time division data to be played following the part of the time division data; and
   playing means configured to first play the time division data which the first obtaining means has first obtained, out of the plurality of time division data.

2. The content playing device according to Claim 1,
   wherein the time division data is configured from data to be played having a plurality of differing qualities;
   and wherein the playing means are configured so as to sequentially play, while obtaining from the distribution server, data to be played of any one quality making up the time division data, regarding each of the plurality of time division data to be played.

3. The content playing device according to Claim 1 or 2, wherein the first obtaining means are configured so as to start processing to obtain the part of time division data, before the point in time when the second obtaining means starts processing to obtain the remaining time division data.

4. The content playing device according to Claim 3, further comprising:

   third obtaining means configured to obtain metadata relating to the content data, regarding which the content playing device can identify the distribution point-in-time at which the distribution server performs multicast distribution of the time division data, regarding each of the plurality of time division data, ahead of obtaining of the content data; and
   point-in-time monitoring means configured to monitor point-in-time which a timer points to;
   wherein the first obtaining means are configured so as to obtain the part of time division data which has been subjected to multicast distribution immediately near the point-in-time to which the timer points when accepting the playing instruction, based on a distribution point-in-time which has been identified from the metadata;
   and wherein the second obtaining means are configured to start processing to obtain the remaining time division data, when the timer has pointed to the distributed point-in-time at which the time division data is to be first distributed after starting processing where the first obtaining means obtain the part of time division data, based on the distribution point-in-time identified from the metadata.

5. The content playing device according to Claim 4, further comprising:

   duplicate obtaining determination means configured to determine whether or not the second obtaining means obtain in duplicate at least any one of one or more time division data making up the part of time division data obtained by the first obtaining means, in addition to the remaining data to be played;
   wherein, regarding each of the plurality of time division data, an identification value to identify the time division data is correlated to the time division data and an identification value to identify the time division data is included in the metadata;
   and wherein the duplicate obtaining determination means are configured so that determination is made that the second obtaining means obtain in duplicate, limited to the case where the identification value correlated to the first time division data which the second obtaining means obtain after the timer has pointed to the distribution point-in-time, is smaller than the identification value of the time division data which can be identified from the metadata upon having been distributed at the distribution point-in-time;
   and wherein, in the event that the duplicate obtaining determination means determine that at least one of the one or more time division data is obtained by the second obtaining means, the playing means do not play one of the same time division data which has obtained by both the first obtaining means and second obtaining means.

6. The content playing device according to Claim 4, further comprising:

third obtaining means configured to obtain metadata relating to the content data, regarding which the content playing device can identify the distribution point-in-time at which the distribution server performs multicast distribution of the time division data, regarding each of the plurality of time division data, ahead of obtaining the content data;

point-in-time referencing means configured to reference the point-in-time when the timer points; and determination means configured to determine whether or not, of time division data of which a distribution point-in-time identified by the metadata is after the point-in-time to which the timer points at the point in time the playing instruction has been accepted, time division data which has already been subjected to multicast distribution exists;

wherein, regarding each of the plurality of time division data, an identification value to identify the time division data is correlated to the time division data, and an identification value to identify the time division data is included in the metadata;

and wherein the determination means are configured so that determination is made that the time division data which has already performed multicast distribution exists, limited to the case where the identification value correlated to the first time division data which the second obtaining means obtains after the timer has pointed to the distribution point-in-time, is greater than the identification value of the time division data which can be identified from the metadata upon having been distributed at the distribution point-in-time;

and wherein the first obtaining means obtain, by unicast communication, not only time division data where the distribution point-in-time identified from the metadata is before the point-in-time to which the timer points, but also the identified distribution point-in-time is after the point-in-time to which the timer points.

7.  The content playing device according to Claim 1,
    wherein the distribution server is configured so that, regarding each of the plurality of time division data, a plurality of RTP packets individually storing a plurality of partial data obtained by dividing the time division data, where an identifier to identify time division data is stored in each RTP packet, are subjected to multicast distribution;
    wherein the second obtaining means are configured so as to obtain from the distribution server a plurality of RTP packets to be subjected to multicast distribution after the point in time when the playing instruction has been accepted;
    and wherein the first obtaining means are configured so as to obtain, from the distribution server by unicast communication, time division data to be identified by identifiers included in the RTP packets which the second obtaining means has first obtained, and
    wherein the playing means generate and play a plurality of time division data from a plurality of RTP packets which the second obtaining means has obtained, after playing time division data where the first obtaining means have obtained.

8.  The content playing device according to Claim 7,
    wherein the first obtaining means obtain only a part of the partial data which is not stored in any of the plurality of RTP packets which the second obtaining means have obtained, out of all partial data making up the time division data to be identified by identifiers included in the RTP packets which the second obtaining means have first obtained;
    and wherein the playing means sequentially play each partial data stored in a plurality of RTP packets which the second obtaining means have obtained, after sequentially playing one or more partial data making up the part of the partial data.

9.  A distribution system, including the content playing device according to any one of Claims 1 through 8, and the distribution server connected to the content playing device so as to be capable of distributing content data to the content playing device.

10. A content playing method to, upon accepting a playing instruction from a user, sequentially play a plurality of time division data regarding which content data to be played has been subjected to time division, while obtaining the time division data from a distribution server, the content playing method comprising:

    a first obtaining process of obtaining by unicast communication from the distribution server, of the plurality of time division data, a part of the time division data regarding which the distribution server has already performed multicast distribution;
    a second obtaining process of obtaining by receiving multicast distribution from the distribution server, of the plurality of time division data, the remaining time division data to be played following the part of the time division data; and
    a playing process of first playing the division data which has first obtained in the first obtaining process, out of the plurality of time division data which has been obtained through the first obtaining process and the second obtaining process.

11. A content playing program to cause a computer to operate as the content playing device according to any one of Claims 1 through 8, the program causing the computer to function as each of the means.

12. A computer-readable recording medium, in which the content playing program according to Claim 11 is recorded.

13. A data structure of metadata relating to content data to be divided by time division into a plurality of time division data and distributed, the content data being distributable by a distribution server by both distribution formats of unicast communication and multicast distribution;
wherein a distribution point-in-time where the distribution server performs multicast distribution of the time division data regarding each of the plurality of time division data, and a URL to be referenced in order to obtain the time division data by unicast communication from the distribution server, are identifiably described.

14. A data structure of data for distribution in the event that a distribution server distributes, using at least one of content data divided by time division into a plurality of time division data and distributed;
wherein the time division data and an identifier to identify the time division data are correlated and recorded, regarding each of the one or more time division data.

# FIG. 1

100

PLAYING DEVICE

140

NETWORK I/F

110

COMMUNICATION CONTROL UNIT

160

BUILT-IN CLOCK UNIT

150

DISPLAY UNIT

130

STORAGE UNIT

120

PLAYING UNIT

# FIG. 2

1

300

DISTRIBUTION SERVER

400

100

PLAYING DEVICE

200

MULTICAST ROUTER

NW

## FIG. 3

5a

```
<MPD type="OnDemand" minBufferTime="PT10.00S availabilityStartTime="2010-11-15T12:00Z" >
    <Period start="PT0S" >
        <RepresentationGroup>
        <SegmentInfoDefault startIndex="1" duration="PT10S" ></SegmentInfoDefault>
            <Representation id="rep1" mimeType="video/mpeg2ts" bandwidth="1024000" default="true"
                    type="Live" timeShiftBufferDepth="0"
                        availabilityStartTime="2010-11-15T12:00Z"
                        availabilityEndTime="2010-11-15T12:30Z" >
            <BaseURL>rtp://239.255.42.42:1234/</BaseURL>
            <SegmentInfo>
                <Url availabilityTime="2010-11-15T12:00:00Z "/>
                <Url availabilityTime="2010-11-15T12:00:10Z "/>
                <Url availabilityTime="2010-11-15T12:00:20Z "/>
                <Url availabilityTime="2010-11-15T12:00:30Z "/>
                    ...
            </SegmentInfo>
        </Representaion>
        <Representation id="rep2" mimeType="video/mpeg2ts" bandwidth="1024000" >
            <SegmentInfo >
                <Url sourceURL="http://exsample.com/rep2-seg1.ts"/>
                <Url sourceURL="http://exsample.com/rep2-seg2.ts"/>
                <Url sourceURL="http://exsample.com/rep2-seg3.ts"/>
                    ...
            </SegmentInfo>
        <Representation/>
        <Representation id="rep3" mimeType="video/mpeg2ts" bandwidth="512000" >
                    ...
        <Representation/>
        </RepresentationGroup>
    </Period>
    <Period start="PT1800S">
        .....
    </Period>
        .....
</MPD>
```

# FIG. 4

5b

```
<MPD type="OnDemand" minBufferTime="PT10.00S availabilityStartTime="2010-11-15T12:00Z" >
    <Period start="PT0S">
        <RepresentationGroup>
        <SegmentInfoDefault startIndex="1" duration="PT10S" ></SegmentInfoDefault>
            <Representation id="rep1" mimeType="video/mpeg2ts" bandwidth="1024000" default="true"
                    type="Live" timeShiftBufferDepth="0"
                        availabilityStartTime="2010-11-15T12:00Z"
                        availabilityEndTime="2010-11-15T12:30Z">
                <SegmentInfo>
                    <UrlTemplate sourceURL="rtp://239.255.42.42:1234/" endIndex="180">
                </SegmentInfo>
            </Representaion>
            <Representation id="rep2" mimeType="video/mpeg2ts" bandwidth="1024000" >
                <SegmentInfo >
                    <UrlTemplate sourceURL="http://exsample.com/rep2-seg$index$.ts" endIndex="180" />
                </SegmentInfo>
            <Representation/>
            <Representation id="rep3" mimeType="video/mpeg2ts" bandwidth="512000" >
                    ...
            <Representation/>
        </RepresentationGroup>
    </Period>
    <Period start="PT1800S">
        .....
    </Period>
    .....
</MPD>
```

25

# FIG. 5

```
     ┌─────────────────────────────┐
     │      START PLAYING          │
     │   PREPARATION PROCESSING    │
     └─────────────────────────────┘
                   │  ⟋S1
     ┌─────────────────────────────┐
     │ OBTAIN TARGET MPD FROM STORAGE UNIT │
     └─────────────────────────────┘
                   │  ⟋S2
     ┌─────────────────────────────┐
     │   PARSE Default Representation │
     └─────────────────────────────┘
                   │  ⟋S3
              Live DISTRIBUTION?  ── NO ──┐
                   │ YES                  │
                   │  ⟋S5                 │
       NO ── CURRENTLY DURING Live DISTRIBUTION? │
        │          │ YES                  │
   ⟋S6 │          │                      │
  ┌──────────────────────┐               │
  │ PARSE NEXT Representation │           │
  └──────────────────────┘               │
                   │  ⟋S7                 │
     ┌─────────────────────────────┐     │
     │ OBTAIN MEDIA SEGMENT CURRENTLY │   │
     │   BEING DISTRIBUTED (Index = N) │  │
     └─────────────────────────────┘     │
                   │  ⟋S8                 │
     ┌─────────────────────────────┐     │
     │   START RECEPTION OF MEDIA   │     │
     │ SEGMENT INDICATED BY Index = N │   │
     │ OF Representation FOR OnDemand │    │
     └─────────────────────────────┘     │
                   │  ⟋S9           ⟋S4   │
     ┌─────────────────────────────┐  ┌──────────────────┐
     │ START RECEPTION OF Representation │ │ START RECEIVING IN ORDER │
     │ FOR Live FROM POINT-IN-TIME TO START │ │ FROM HEAD MEDIA SEGMENT │
     │ DISTRIBUTION OF Index = N+1 │  └──────────────────┘
     └─────────────────────────────┘     │
                   │  ⟋S10
     ┌─────────────────────────────┐
     │ START PLAYING UPON HAVING RECEIVED │
     │    minBufferTime OR MORE OF  │
     │    THE HEAD MEDIA SEGMENT    │
     └─────────────────────────────┘
                   │
     ┌─────────────────────────────┐
     │       END PLAYING           │
     │   PREPARATION PROCESSING    │
     └─────────────────────────────┘
```

# FIG. 6

| LIVE DISTRIBUTION SCHEDULE OF DISTRIBUTION SERVER | N−3 | N−2 | N−1 | N | N+1 | N+2 | N+3 | N+4 | N+5 | N+6 | N+7 | N+8 | N+9 | N+10 | · · · · · · · · |

**RECEPTION/PLAYING SCHEDULE OF CONVENTIONAL CLIENT**

RECEPTION OF LIVE DISTRIBUTION MEDIA SEGMENT: N+1 N+2 N+3 N+4 N+5 N+6 N+7 N+8 N+9 N+10 · · · · · · · · ·

PLAY → PLAY START DELAY ← N+1 N+2 N+3 N+4 N+5 N+6 N+7 N+8 N+9 N+10 · · · ·

**RECEPTION/PLAYING SCHEDULE OF PLAYING DEVICE 100**

RECEPTION OF ON-DEMAND DISTRIBUTION MEDIA SEGMENT: N

RECEPTION OF LIVE DISTRIBUTION MEDIA SEGMENT: N+1 N+2 N+3 N+4 N+5 N+6 N+7 N+8 N+9 N+10 · · · · · · · · ·

PLAY → N N+1 N+2 N+3 N+4 N+5 N+6 N+7 N+8 N+9 N+10 · · ·

PLAY ON-DEMAND DISTRIBUTION MEDIA SEGMENT

PLAY LIVE DISTRIBUTION MEDIA SEGMENT

START DATA RECEPTION

TIME

EP 2 665 261 A1

# FIG. 7

START PLAYING
PREPARATION PROCESSING

S21
OBTAIN TARGET MPD FROM STORAGE UNIT

S22
PARSE Default Representation

S23
Live DISTRIBUTION?
NO
YES

S25
CURRENTLY DURING Live DISTRIBUTION?
NO
YES

S26
PARSE NEXT Representation

S27
OBTAIN MEDIA SEGMENT CURRENTLY
BEING DISTRIBUTED (Index = N)

S28
START RECEPTION OF MEDIA SEGMENT
INDICATED BY Index = 1 THROUGH N OF
Representation FOR OnDemand

S29
START RECEPTION OF Representation
FOR Live FROM POINT-IN-TIME TO START
DISTRIBUTION OF Index = N+1

S24
START RECEIVING IN ORDER
FROM HEAD MEDIA SEGMENT

S30
START PLAYING UPON HAVING RECEIVED
minBufferTime OR MORE OF
THE HEAD MEDIA SEGMENT

END PLAYING
PREPARATION PROCESSING

# FIG. 8

FIG. 8 — Live distribution schedule of distribution server and reception/playing schedule of playing device 100.

**LIVE DISTRIBUTION SCHEDULE OF DISTRIBUTION SERVER:**
N−3 | N−2 | N−1 | N | N+1 | N+2 | N+3 | N+4 | N+5 | N+6 | N+7 | N+8 | N+9 | N+10 · · · · ·

**RECEPTION/PLAYING SCHEDULE OF PLAYING DEVICE 100:**

RECEPTION OF ON-DEMAND DISTRIBUTION MEDIA SEGMENT: 1 | 2 | 3 · · · · · N

RECEPTION OF LIVE DISTRIBUTION MEDIA SEGMENT: N+1 | N+2 | N+3 | N+4 | N+5 | N+6 | N+7 | N+8 | N+9 | N+10 · · · · ·

PLAY: 1 | 2 | 3 · · · · · N | N+1 | N+2 | N+3 | N+4 · · · · ·

PLAY ON-DEMAND DISTRIBUTION MEDIA SEGMENT

PLAY LIVE DISTRIBUTION MEDIA SEGMENT

START DATA RECEPTION

TIME

## FIG. 9

100'
PLAYING DEVICE

140
NETWORK I/F

110'
COMMUNICATION
CONTROL UNIT

160
BUILT-IN CLOCK
UNIT

150
DISPLAY UNIT

130
STORAGE UNIT

120
PLAYING UNIT

## FIG. 10

1'

300'
DISTRIBUTION
SERVER

100'
PLAYING
DEVICE

200
MULTICAST
ROUTER

NW

400

FIG. 11

START PLAYING
PREPARATION PROCESSING

~S41
OBTAIN TARGET MPD FROM STORAGE UNIT

~S42
PARSE Default Representation

~S43
Live DISTRIBUTION? — NO

YES

~S47
CURRENTLY DURING Live DISTRIBUTION? — NO

YES

~S46
PARSE NEXT Representation

~S48
OBTAIN MEDIA SEGMENT CURRENTLY
BEING DISTRIBUTED (Index = N)

~S49
START RECEPTION OF MEDIA
SEGMENT INDICATED BY Index = N
OF Representation FOR OnDemand

~S50
START RECEPTION OF MEDIA SEGMENT
OF Representation FOR Live

~S51
START PLAYING UPON HAVING
RECEIVED minBufferTime OR MORE OF
THE HEAD MEDIA SEGMENT

~S52
REFERENCE INDEX OF MEDIA SEGMENT OF
Representation FOR Live FIRST RECEIVED

~S53
=M+1(M<N) — WHAT IS INDEX VALUE? — =N+1

=M+1(M>N)

~S54
DECIDE TO RECEIVE MEDIA SEGMENT
INDICATED BY Index = N+1 THROUGH M OF
Representation FOR OnDemand

~S55
DECIDE TO DISCARD MEDIA
SEGMENT OF Representation FOR
Live RECEIVED IN DUPLICATE

~S44
START RECEIVING IN ORDER
FROM HEAD MEDIA SEGMENT

~S45
START PLAYING UPON HAVING
RECEIVED minBufferTime OR
MORE OF THE HEAD
MEDIA SEGMENT

END PLAYING
PREPARATION PROCESSING

# FIG. 12

(a)

| PSI/SI |
| TS#1 |
| ⋮ |
| TS#M |

| PMT |
| MEDIA SEGMENT DESCRIPTOR |
| index=N |

(b)

| stype BOX |
| MEDIA SEGMENT INDEX BOX (Index=N) |
| moof BOX |
| mdat BOX |

# FIG. 13

EP 2 665 261 A1

# FIG. 14

LIVE DISTRIBUTION SCHEDULE OF DISTRIBUTION SERVER

| N-2 | N-1 | N | N+1 | N+2 | N+3 | N+4 | N+5 | N+6 | N+7 | N+8 | N+9 | N+10 | N+11 | . . . . . . . |

RECEPTION OF ON-DEMAND DISTRIBUTION MEDIA SEGMENT

| N | N+1 |

RECEPTION OF LIVE DISTRIBUTION MEDIA SEGMENT

| N+2 | N+3 | N+4 | N+5 | N+6 | N+7 | N+8 | N+9 | N+10 | N+11 | . . . . . . . |

DISCARD

PLAY

| N | N+1 | N+2 | N+3 | N+4 | N+5 | N+6 | N+7 | N+8 | N+9 | N+10 | . . . |

PLAY ON-DEMAND DISTRIBUTION MEDIA SEGMENT

PLAY LIVE DISTRIBUTION MEDIA SEGMENT

START DATA RECEPTION

RECEPTION/PLAYING SCHEDULE OF PLAYING DEVICE 100'

TIME

# FIG. 15

```
                                    ┌──────────────────────────┐
                                    │      RTP HEADER          │
                                    │   (Marker bit = 1)       │
                                    ├──────────────────────────┤
                                    │ RTP EXTENDED HEADER      │
                                    │      Index = N           │
┌──────────────────────────┐        ├──────────────────────────┤
│                          │        │                          │
│     MEDIA SEGMENT        │        │     MEDIA SEGMENT        │
│     (index=N)            │        │        N#1               │
│                          │        │                          │
│                          │        └──────────────────────────┘
│                          │                        Pak-N₁
│                          │
└──────────────────────────┘        ┌──────────────────────────┐
                                    │      RTP HEADER          │
                                    │   (Marker bit = 0)       │
┌──────────────────────────┐        ├──────────────────────────┤
│                          │        │                          │
│     MEDIA SEGMENT        │        │     MEDIA SEGMENT        │
│     (index=N+1)          │        │        N#2               │
│                          │        │                          │
│                          │        └──────────────────────────┘
│                          │                        Pak-N₂
│                          │
└──────────────────────────┘        ┌──────────────────────────┐
                                    │      RTP HEADER          │
                                    │   (Marker bit = 1)       │
                                    ├──────────────────────────┤
                                    │ RTP EXTENDED HEADER      │
                                    │      Index = N+1         │
                                    ├──────────────────────────┤
                                    │                          │
                                    │     MEDIA SEGMENT        │
                                    │        N+1#1             │
                                    │                          │
                                    └──────────────────────────┘
                                                   Pak-(N+1)₁
```

## FIG. 16

100" PLAYING DEVICE

140 NETWORK I/F

110" COMMUNICATION CONTROL UNIT

160 BUILT-IN CLOCK UNIT

150 DISPLAY UNIT

130 STORAGE UNIT

120 PLAYING UNIT

## FIG. 17

1"

100" PLAYING DEVICE

200 MULTICAST ROUTER

NW

300" DISTRIBUTION SERVER

400

# FIG. 18

# FIG. 19

START PLAYING
PREPARATION PROCESSING

S61
OBTAIN TARGET MPD FROM STORAGE UNIT

S62
PARSE Default Representation

S63
Live DISTRIBUTION?　NO

YES

S65
CURRENTLY DURING Live DISTRIBUTION?　NO

YES

S66
PARSE NEXT Representation

S67
START RECEPTION OF MEDIA SEGMENT
OF Representation FOR Live

S68
RECEIVE MEDIA SEGMENT OF Representation
FOR OnDemand, INDICATED BY Index OF
RECEIVED HEAD PACKET

S64
START RECEIVING IN ORDER
FROM HEAD MEDIA SEGMENT

S69
START PLAYING UPON HAVING RECEIVED
minBufferTime OR MORE OF
THE HEAD MEDIA SEGMENT

END PLAYING
PREPARATION PROCESSING

# FIG. 20

MEDIA SEGMENT
(index=N)

MEDIA SEGMENT
(index=N+1)

RTP HEADER
(Marker bit = 1)

RTP EXTENDED HEADER
Segment Idx = N
Byte offset = 0

MEDIA SEGMENT
N#1

RTP HEADER
(Marker bit = 0)

RTP EXTENDED HEADER
Segment Idx = N
Byte offset = XXX

MEDIA SEGMENT
N#2

RTP HEADER
(Marker bit = 1)

RTP EXTENDED HEADER
Segment Idx = N+1
Byte offset = 0

MEDIA SEGMENT
N+1#1

# FIG. 21

```
        ┌──────────────────────────┐
        │      START PLAYING       │
        │  PREPARATION PROCESSING  │
        └──────────────────────────┘
                     │              ~S81
        ┌──────────────────────────────┐
        │ OBTAIN TARGET MPD FROM STORAGE UNIT │
        └──────────────────────────────┘
                     │              ~S82
        ┌──────────────────────────────┐
        │   PARSE Default Representation   │
        └──────────────────────────────┘
                     │        ~S83          NO
                 ◇ Live DISTRIBUTION? ◇──────────────┐
                     │ YES                           │
                     │         ~S85                  │
          NO   ◇ CURRENTLY DURING Live DISTRIBUTION? ◇
          ┌──────────│                               │
   ~S86   │          │ YES                           │
 ┌────────────────┐  │                               │
 │ PARSE NEXT     │  │              ~S87             │
 │ Representation │  ┌──────────────────────────┐    │
 └────────────────┘  │ START RECEPTION OF MEDIA SEGMENT │
                     │   OF Representation FOR Live     │
                     └──────────────────────────┘    │
                     │              ~S88             │
        ┌──────────────────────────────┐            │
        │   RECEIVE PART OF MEDIA SEGMENT   │        │
        │ (FROM HEAD TO ByteOffset) OF Representation │  ~S84
        │ FOR OnDemand, INDICATED BY index OF │  ┌──────────────────────┐
        │     RECEIVED HEAD PACKET      │      │ START RECEIVING IN ORDER │
        └──────────────────────────────┘      │ FROM HEAD MEDIA SEGMENT  │
                     │                         └──────────────────────┘
                     │←────────────────────────────┘
                     │              ~S89
        ┌──────────────────────────────┐
        │ START PLAYING UPON HAVING RECEIVED │
        │    minBufferTime OR MORE OF    │
        │    THE HEAD MEDIA SEGMENT      │
        └──────────────────────────────┘
                     │
        ┌──────────────────────────┐
        │      END PLAYING         │
        │  PREPARATION PROCESSING  │
        └──────────────────────────┘
```

## INTERNATIONAL SEARCH REPORT

| | International application No. |
| --- | --- |
| | PCT/JP2012/050583 |

**A. CLASSIFICATION OF SUBJECT MATTER**
*H04N7/173(2011.01)i*

According to International Patent Classification (IPC) or to both national classification and IPC

**B. FIELDS SEARCHED**

Minimum documentation searched (classification system followed by classification symbols)
H04N7/173

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho     1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005-124193 A  (Microsoft Corp.),<br>12 May 2005 (12.05.2005),<br>paragraphs [0049] to [0060]; fig. 5<br>& US 2005/0081244 A1     & EP 1523190 A1<br>& CA 2480979 A           & BR 404326 A<br>& KR 10-2005-0035071 A   & CN 1606352 A<br>& BRA PI0404326          & MX PA04009351 A<br>& CA 2480979 A1 | 1-14 |
| A | JP 2007-215069 A  (Sony Corp.),<br>23 August 2007 (23.08.2007),<br>paragraphs [0050] to [0051], [0053] to [0056]<br>& US 2008/0074545 A1     & EP 1819169 A2<br>& KR 10-2007-0081780 A   & CN 101072341 A | 1-14 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 February, 2012 (07.02.12) | 21 February, 2012 (21.02.12) |

| Name and mailing address of the ISA/<br>Japanese Patent Office | Authorized officer |
| --- | --- |
| Facsimile No. | Telephone No. |

Form PCT/ISA/210 (second sheet) (July 2009)